(19) Europäisches Patentamt
European Patent Office
Office européen des brevets

(11) **EP 4 432 735 A1**

(12) **EUROPEAN PATENT APPLICATION**
published in accordance with Art. 153(4) EPC

(43) Date of publication:
**18.09.2024   Bulletin 2024/38**

(21) Application number: **22892023.7**

(22) Date of filing: **09.11.2022**

(51) International Patent Classification (IPC):
**H04W 48/10** *(2009.01)*      **H04W 56/00** *(2009.01)*

(52) Cooperative Patent Classification (CPC):
**H04W 48/10; H04W 56/00**

(86) International application number:
**PCT/CN2022/130984**

(87) International publication number:
**WO 2023/083229 (19.05.2023 Gazette 2023/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.11.2021   CN 202111319831**
**03.12.2021   CN 202111466374**
**03.12.2021   CN 202111475189**

(71) Applicant: **Shanghai Cygnus Semiconductor Co., Ltd.**
**Shanghai 201203 (CN)**

(72) Inventor: **HAN, Mengjie**
**Shanghai 201203 (CN)**

(74) Representative: **HGF**
**HGF Limited**
**1 City Walk**
**Leeds LS11 9DX (GB)**

(54) **METHOD AND SYSTEM FOR DETERMINING FREQUENCY DOMAIN POSITION OF SYNCHRONIZATION SIGNAL BLOCK**

(57)      Provided in the present disclosure are a method and system for determining a frequency domain position of a Synchronization Signal Block (SSB). In the present disclosure, when the number of synchronization rasters (synch rasters) in a band is greater than 256, the direct expansion of a value range of a formula (I) is realized based on the number of the synch rasters in the band; that is, the indication of an offset formula (I) between frequency domain positions of synch rasters where a Cell Define SSB (CD-SSB) and a None Cell Define SSB (NCD-SSB) are located may be implemented in the band, such that a frequency domain position of a CD-SSB may be determined based on a searched NCD-SSB, thereby shortening the time for a terminal device to acquire a CD-SSB, and shortening cell access delay of the terminal device.

Fig. 2

in a case that a None Cell Define SSB (NCD-SSB) is searched in a band, a frequency domain position offset is determined — S101

according to the frequency domain position $GSCN_{NCD-SSB}$ of a synchronization raster (synch raster) where the NCD-SSB is located and the frequency domain position offset, the frequency domain position $GSCN_{CD-SSB}$ of the synch raster where the CD-SSB is located is determined — S102

## Description

## Technical Field

The present disclosure relates to a method and system for determining a frequency domain position of a synchronization signal block, and belongs to the technical field of communications.

## Background

In an initial access process of a fifth generation mobile communication system, in each band, a terminal device searches and scans an synchronization signal block (SSB, Synchronization Signal and PBCH Block) on a predetermined synchronization raster (synch raster) to access a cell, and acquires cell information of a target cell. The synch raster may be used for indicating a frequency domain position, and a frequency domain position of the SSB is associated with a Global Synchronization Channel Number (GSCN). Table 5.4.3.1-1 in 3GPP TS 38.104(V17.3.0) shows this association, and details are shown in Table 1.

Table 1: GSCN parameters for the global frequency rasters

| Range of frequencies (MHz) | SS block frequency position $SS_{REF}$ | GSCN | Range of GSCN |
|---|---|---|---|
| 0-3000 | N*1200kHz+M*50kHz, N=1:2499, M E{1 ,3,5} (Note) | 3N+(M-3)/2 | 2-7498 |
| 3000-24250 | 3000MHz+N*1.44MHz, N=0:14756 | 7499+N | 7499-22255 |
| 24250-100000 | 24250.08MHz+N*17.28MHz, N=0:4383 | 22256+N | 22256-26639 |
| Note: The default value for operation bands which only support SCS spaced channel raster(s) is M=3. | | | |

As shown in Table 1, each synch raster corresponds to one GSCN, a specific correspondence relationship is shown in a second column and a third column of Table 1, and the GSCNs within different Frequency Ranges (FRs) have different granularity.

The SSBs may be classified into two categories, which are a Cell Define SSB (CD-SSB) and a None Cell Define SSB (NCD-SSB). The CD-SSB is mainly configured to achieve initial access of a cell, including a System Information Block 1 (SIB1) for accessing a cell, and the NCD-SSB is mainly configured not to achieve initial access of a cell, for example, measurement. When deploying the SSBs, operators generally deploy the NCD-SSB and the CD-SSB on the synch rasters together. Therefore, when a terminal searches the CD-SSB on the synch rasters, there exists a certain probability that the searched SSB is the NCD-SSB. However, since the NCD-SSB does not include information of the SIB1 for accessing a target cell, the terminal needs to find a target CD-SSB through the NCD-SSB.

The SSB includes a Master Information Block (MIB) and a Physical Broadcast Channel (PBCH) payload. The MIB achieves transmission through a PBCH. The PBCH payload is formed at a physical layer, occupies 8 bits, and is configured to indicate information such as system frame numbers, half-frame indicators, candidate SSB indexes, etc. A parameter "ssb-Subcarrieroffset" of the MIB indicates a Resource Element level (RE-level) offset between the SSB and a Control-Resource Set #0 (CORESET#0). Within the New Radio (NR) FR2, when the terminal device demodulates a value as 12 or 13, it indicates that the SSB is the NCD-SSB, i.e. the SSB cannot be configured to achieve initial access of the cell. In this case, the terminal needs to determine a GSCN offset $N_{GSCN}^{offset}$ between the CD-SSB and the NCD-SSB according to a parameter controlResourceSetZero and a parameter searchSpaceZero in a parameter "pdcch-configSIB1" in the MIB, such that the target CD-SSB is found through the NCD-SSB, and a specific mapping relationship is shown in Table 2.

Table 2:

| Relationship (FR2) among $K_{SSB}$, pdcch-configSIB1, and $N_{GSCN}^{offset}$ | | |
|---|---|---|
| $K_{SSB}$ | 16×controlResourceSetZero+searchSpaceZero | $N_{GSCN}^{\text{offset}}$ |
| $P_1$ | 0, 1,..., 255 | 1, 2,..., 256 |

(continued)

| Relationship (FR2) among K$_{SSB}$, pdcch-configSIB1, and $N_{GSCN}^{offset}$ | | |
|---|---|---|
| K$_{SSB}$ | 16×controlResourceSetZero+searchSpaceZero | $N_{GSCN}^{\text{offset}}$ |
| P$_2$ | 0, 1,..., 255 | -1, -2,..., -256 |
| P$_3$ | 0, 1,..., 255 | Reserved, Reserved,..., Reserved |

The value of the $N_{GSCN}^{offset}$ is between -256 and 256, this is because the band of the current fifth generation mobile communication system is within the FR2 which is 24.25 GHz-52.6 GHz. Within the FR2, the number of the synch rasters in all bands does not exceed 256.

However, within a band with a lowest frequency being greater than 52.6 GHz, in the related art, the $N_{GSCN}^{offset}$ with an absolute value being greater than 256 cannot be indicated. Thus, when the terminal device has searched the NCD-SSB, delay in accessing a cell due to the inability of the terminal device to find a suitable CD-SSB is increased.

Summary

The present disclosure is intended to provide a method and system for determining a frequency domain position of an SSB to overcome deficiencies in the related art, such that the time for a terminal device to acquire a corresponding CD-SSB based on a searched NCD-SSB may be shortened, and delay of the terminal device for accessing a cell is shortened. In order to achieve the above objective, the present disclosure is implemented by the following technical solutions.

A method for determining a frequency domain position of an SSB, includes:

in a case that a None Cell Define SSB (NCD-SSB) is searched in a band, a frequency domain position offset $N_{GSCN}^{offset}$ is determined, the $N_{GSCN}^{offset}$ indicates an offset between a frequency domain position of a synchronization raster (synch raster) where a Cell Define SSB (CD-SSB) is located and a frequency domain position of a synchronization raster where the NCD-SSB is located, a value of $\left|N_{GSCN}^{offset}\right|$ falls in [1, 256×M], M is an integer not less than 2, a value of the number of synch rasters in the band falls in (256×(M-1), 256×M], and a minimum frequency value of the band is not less than 52.6 GHz; and

according to the frequency domain position GSCN$_{NCD-SSB}$ of the synch raster where the NCD-SSB is located and the $N_{GSCN}^{offset}$, the frequency domain position GSCN$_{CD-SSB}$ of the synch raster where the CD-SSB is located is determined.

A cell broadcasting method, includes:

Synchronization Signal Blocks (SSBs) is broadcast in a band.
in a case that the SSB is an None Cell Define SSB (NCD-SSB),, an absolute value of a frequency domain position offset $\left|N_{GSCN}^{offset}\right|$ falls in [1, 256×M], a $N_{GSCN}^{offset}$ indicates an offset between a frequency domain position of a synchronization raster (synch raster) where a Cell Define SSB (CD-SSB) is located and a frequency domain position of a synchronization raster where the NCD-SSB is located, M is an integer not less than 2, and a value of the number of synch rasters in the band falls in (256×(M-1), 256×M].

A system for determining a frequency domain position of a Synchronization Signal Block (SSB), includes:

a first determination module, configured to, in a case that an NCD-SSB is searched in a band, determine a frequency domain position offset $N_{GSCN}^{offset}$, the $N_{GSCN}^{offset}$ indicates an offset between frequency domain position of a synchronization raster where a Cell Define SSB (CD-SSB) is located and a frequency domain position of a synchronization raster where the NCD-SSB is located, a value of $\left|N_{GSCN}^{offset}\right|$ falls in [1, 256×M], M is an integer not less than 2, a value of the number of synchronization rasters in the band falls in (256×(M-1), 256×M], and a minimum frequency value of the band is not less than 52.6 GHz; and

a second determination module, configured to, according to the frequency domain position GSCN$_{NCD-SSB}$ of the synchronization raster where the NCD-SSB is located and the $N_{GSCN}^{offset}$, determine the frequency domain position GSCN$_{CD-SSB}$ of the synchronization raster where the CD-SSB is located.

A cell broadcasting system, includes:

a broadcasting module, the broadcasting module is configured to broadcast Synchronization Signal Blocks (SSBs) in a band,

in a case that the SSB is a None Cell Define SSB (NCD-SSB), an absolute value of a frequency domain position offset $\left|N_{GSCN}^{offset}\right|$ falls in [1, 256×M], a $N_{GSCN}^{offset}$ indicates an offset between a frequency domain position of a synchronization raster where a Cell Define SSB (CD-SSB) is located and a frequency domain position of a synchronization raster where the NCD-SSB is located, M is an integer not less than 2, a value of the number of synchronization rasters in the band falls in (256×(M-1), 256×M].

An electronic device, includes a memory, a processor, and a computer program stored in the memory and executable on the processor. The processor, when executing the computer program, implements the method for determining the frequency domain position of the Synchronization Signal Block (SSB) described in any one of the above, or the cell broadcasting method described in any one of the above.

A non-transitory computer readable storage medium, having a computer program stored thereon, when being executed by a processor, the computer program implements the method for determining the frequency domain position of the Synchronization Signal Block (SSB) described in any one of the above, or the cell broadcasting method described in any one of the above.

Compared with the related art, the method and system for determining the frequency domain position of the SSB provided by the embodiments of the present disclosure have the following beneficial effects. In the present disclosure, when the number of synch rasters in a band is greater than 256, the direct expansion of a value range of $N_{GSCN}^{offset}$ is realized based on the number of the synch rasters in the band; that is, the indication of an offset $N_{GSCN}^{offset}$ between frequency domain positions of synch rasters where a Cell Define SSB (CD-SSB) and a None Cell Define SSB (NCD-SSB) are located may be implemented in the band, such that a frequency domain position of a corresponding CD-SSB may be determined based on a searched NCD-SSB, thereby shortening the time for a terminal device to acquire a CD-SSB, and shortening cell accessing delay of the terminal device.

**Brief Description of the Drawings**

Fig. 1 is a schematic structural diagram of a communication system according to an embodiment of the present disclosure.

Fig. 2 is a flowchart of a method for determining a frequency domain position of an SSB according to Embodiment 1 of the present disclosure.

Fig. 3 is a schematic diagram of modules of a system for determining a frequency domain position of an SSB according to Embodiment 3 of the present disclosure.

Fig. 4 is a schematic structural diagram of an electronic device according to Embodiment 5 of the present disclosure.

Fig. 5 is a schematic diagram of an RE level offset of an SSB and a type0-PDCCH according to Embodiment 8 of the present disclosure.

Fig. 6 is a schematic diagram of a correspondence relationship between a sub-carrier offset parameter and a frequency domain position offset within an FR1 in the related art.

Fig. 7 is a schematic diagram of a correspondence relationship between a sub-carrier offset parameter and a frequency domain position offset within an FR2 in the related art.

Fig. 8 is a block structural diagram of a communication system according to an embodiment of the present application.

Fig. 9 is a flowchart of a cell access method according to an embodiment of the present application.

Fig. 10 is a schematic diagram of an RE level offset of an SSB and a type0-PDCCH according to an embodiment of the present application.

Fig. 11 is a schematic diagram of an RE level offset of an SSB and a type0-PDCCH according to an embodiment of the present application.

Fig. 12 is a schematic diagram of an RE level offset of an SSB and a type0-PDCCH according to an embodiment of the present application.

## Detailed Description of the Embodiments

The present disclosure is further described below with reference to the drawings. The following embodiments are only used to illustrate the technical solutions of the present disclosure more clearly, and are not to be used to limit the scope of protection of the present disclosure.

An information broadcasting method and a cell access method in the embodiments of the present application are applicable to various communication systems, such as a Global System of Mobile communication (GSM), a Code Division Multiple Access (CDMA) system, a Wideband Code Division Multiple Access (WCDMA) system, a General Packet Radio Service (GPRS), a Long Term Evolution (LTE) system, an LTE Frequency Division Duplex (FDD) system, LTE Time Division Duplex (TDD), a Universal Mobile Telecommunication System (UMTS), a 5G system, or the like.

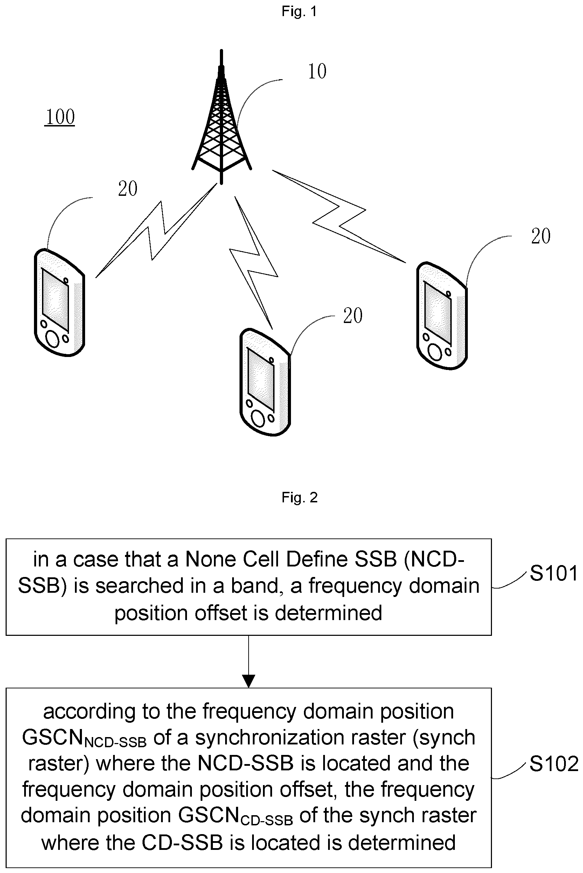

As shown in Fig. 1, the information broadcasting method or the cell access method in the present application are applicable to a communication system 100 shown in Fig. 1. The communication system 100 includes a base station 10 and a terminal device 20. The base station 10 may provide communication coverage for a region, and may communicate with the terminal device 20 in the region. In some implementations, the base station 10 may be a base station in a GSM system or a CDMA system, may be a base station in a WCDMA system, may be an evolved base station in an LTE system, or may be a base station in a 5G system.

The terminal device 20 may be an access terminal, User Equipment (UE), a subscriber unit, a subscriber station, a mobile station, a mobile platform, a remote station, a remote terminal, a mobile device, a user terminal, a terminal, a wireless communication device, a user agent, or a user device. The access terminal may be a cellular phone, a cordless phone, a Session Initiation Protocol (SIP) phone, a Wireless Local Loop (WLL) station, a Personal Digital Assistant (PDA), a handheld device having a wireless communication function, a computing device or another processing device of a wireless modem, a vehicle device, a wearable device, a terminal device in a 5G network, or a terminal device in a future evolved PLMN.

For ease understanding of the solution of the present application, some concepts involved in the present application are briefly introduced below.

SSB: a common channel and a signal in an New Radio (NR) system, such as a Synchronization Signal (SS) and a Physical Broadcast Channel (PBCH), need to cover an entire cell by means of multi-beam scanning for ease receiving of terminal devices in the cell. Multi-beam transmission of the synchronization signal is implemented by defining an SS/PBCH burst set; one synchronization signal burst set includes one or more SS/PBCH blocks (abbreviated as SSBs); and one SSB is configured to carry one beam of synchronization signals and PBCHs.

Synch raster: the synch raster is used for configuring a basic frequency domain position of the SSB, and a step size and density of the synch raster determine the time for the terminal device to perform initial cell search.

When the terminal device just starts up for cell search, the terminal device may only detect an SSB signal according to a band that is supported by operators and the terminal device for downlink time-frequency synchronization. A value of an NR Absolute Radio Frequency Channel Number (NR-ARFCN) (for coding a frequency domain range of a reference frequency) has a large range due to small granularity of a global frequency raster, and if a blind test is directly performed according to the global frequency raster, synchronization delay is relatively large. Therefore, in order to effectively reduce synchronization delay of this process, the concept of the synch raster is defined, and a search range is limited through a GSCN.

## Embodiment 1:

This embodiment provides a method for determining a frequency domain position of a Synchronization Signal Block (SSB), and the method for determining the frequency domain position of this embodiment is applicable to terminal devices such as mobile phones, tablet computers, wearable devices, etc. Fig. 2 shows a flowchart of the method for determining the frequency domain position according to this embodiment. Referring to Fig. 2, the method for determining the frequency domain position of this embodiment includes:

S101, in a case that a None Cell Define SSB (NCD-SSB) is searched in a band, a frequency domain position offset $N_{GSCN}^{offset}$ is determined.

S102, according to the frequency domain position GSCN$_{NCD-SSB}$ of a synchronization raster (synch raster) where the NCD-SSB is located and the $N_{GSCN}^{offset}$, the frequency domain position GSCN$_{CD-SSB}$ of the synch raster where the CD-SSB is located is determined.

In this embodiment, the $N_{GSCN}^{offset}$ indicates an offset between a frequency domain position of a synch raster where a Cell Define SSB (CD-SSB) is located and a frequency domain position of a synch raster where the NCD-SSB is located, a value of $\left| N_{GSCN}^{offset} \right|$ falls in [1, 256×M], M is an integer not less than 2, a value of the number of synch rasters in the band falls in (256×(M-1), 256×M).

In this embodiment, when the number of the synch rasters in the band is greater than 256, the direct expansion of a value range of the $N_{GSCN}^{offset}$ is realized based on the number of the synch rasters in the band; that is, the indication of the offset $N_{GSCN}^{offset}$ between the frequency domain positions of the synch rasters where the CD-SSB and the NCD-SSB are located may be implemented in the band.

Furthermore, in this embodiment, $GSCN_{CD-SSB} = GSCN_{NCD-SSB} + N_{GSCN}^{offset}$, the indication from the synch raster where the searched NCD-SSB is located to the synch raster where the corresponding CD-SSB is located is realized when the number of the synch rasters in the band is greater than 256, such that the time for the terminal device to acquire the CD-SSB may be shortened, and cell accessing delay of the terminal device is shortened.

Further, in this embodiment, whether the searched SSB is the NCD-SSB may be determined according to a sub-carrier offset parameter K$_{SSB}$ for representing a sub-carrier offset between a sub-carrier zero of a Common Resource Block (CRB) and a sub-carrier zero of the SSB, and in a case that the searched SSB is the NCD-SSB, an actual direction of the frequency domain position offset may be further determined according to a value of the K$_{SSB}$. For example, in a case that K$_{SSB}$ =P$_1$, a value range of the $N_{GSCN}^{offset}$ is [1, 256×M]; and in a case that K$_{SSB}$ = P$_2$, the value range of the $N_{GSCN}^{offset}$ is [-256×M, -1]. Therefore, based on this embodiment, only two values of the K$_{SSB}$ may be configured to indicate a mapping relationship of two groups between a PDCCH-System Information Block 1 configuration parameter (PDCCH-configSIB1) and the $N_{GSCN}^{offset}$.

Further, before the NCD-SSB is searched in the band, the method further includes:

in a case that the value of the K$_{SSB}$ falls in [0, p$_0$], the SSB is determined as the CD-SSB, and the CD-SSB is demodulated to attempt to initiate cell access;
in a case that the value of the K$_{SSB}$ falls in [p$_0$+1, p$_0$+2M], the SSB is determined as the NCD-SSB, a target CD-SSB is determined according to the NCD-SSB, and the target CD-SSB is demodulated to attempt to initiate cell access.

In some embodiments, it may be learned from the above embodiments that, the value of the K$_{SSB}$ may be configured according to a difference between an SCS of the SSB and an SCS of a corresponding type0-PDCCH. As an implementation, the K$_{SSB}$ may be configured as: in a case that the value of the K$_{SSB}$ is [0, p$_0$], the SSB is the CD-SSB, and the terminal device may directly attempt to access a cell; and in a case that the value of the K$_{SSB}$ is [p$_0$+1, p$_0$+2M, the SSB is the NCD-SSB, and the terminal device may find a suitable CD-SSB based on the NCD-SSB and the K$_{SSB}$, and attempt to access the cell.

It is to be noted that, p$_0$ and M both are positive integers, and a value of p$_0$ may also be determined according to the difference between the SCS of the SSB and the SCS of the corresponding type0-PDCCH; and at the same time, the value of the number of the synch rasters in the band falls in (256×(M-1), 256×M].

In the above solution, in a case that the value of the $K_{SSB}$ falls in [0, $p_0$], cell access may be directly attempted based on the searched SSB; and in a case that the value of the $K_{SSB}$ falls in [$p_0$+1, $p_0$+2M], the suitable CD-SSB may be found based on the $K_{SSB}$, and cell access is attempted. Therefore, in a band higher than 52.6 GHz, in a case that the SCS of the SSB is different from an SCS of a PDCCH where a CORESET#0 is located, the terminal device may find a suitable CD-SSB to reduce cell accessing delay.

In some other implementations, an indication parameter is obtained by combining the sub-carrier offset parameter $K_{SSB}$ and an extended parameter A, and in this case, the value of the sub-carrier offset parameter $K_{SSB}$ represents a sub-carrier offset of the SSB.

When the terminal device attempts to access the cell, the sub-carrier offset parameter $K_{SSB}$ and the extended parameter A in the SSB are analyzed; when a value of the extended parameter A is null or falls in a first range, and the value of the sub-carrier offset parameter $K_{SSB}$ or a value after the sub-carrier offset parameter $K_{SSB}$ and the extended parameter A are combined falls in a second range, the type of the SSB is determined as the CD-SSB, and the CD-SSB is demodulated to attempt to initiate cell access.

When the value of the extended parameter A falls in a third range, and the value of the sub-carrier offset parameter $K_{SSB}$ or the value after the sub-carrier offset parameter $K_{SSB}$ and the extended parameter A are combined falls in a fourth range, the type of the SSB is determined as the NCD-SSB, the target CD-SSB is determined according to the NCD-SSB, and then the target CD-SSB is demodulated to attempt to initiate cell access.

For example, the mode of combining the sub-carrier offset parameter $K_{SSB}$ and the extended parameter A still is that the extended parameter A occupies a high-order bit, and the sub-carrier offset parameter $K_{SSB}$ occupies a low-order bit; and the extended parameter A occupies 1 bit, and the sub-carrier offset parameter $K_{SSB}$ occupies 4 bits.

In this example, if the value of the extended parameter A is null or falls in the first range (e.g. the first range is 0), in this case, if the value of the sub-carrier offset parameter $K_{SSB}$ falls in the second range (e.g. the second range is 0-11) or the value after the sub-carrier offset parameter $K_{SSB}$ and the extended parameter A are combined falls in the second range (e.g. the second range is 0-11), the type of the SSB is determined as the CD-SSB, and cell access may be directly performed according to the CD-SSB. If the value of the extended parameter A falls in the third range (e.g. the third range is 1), in this case, if the value of the sub-carrier offset parameter $K_{SSB}$ falls in the fourth range (e.g. the fourth range is 12-13) or the value after the sub-carrier offset parameter $K_{SSB}$ and the extended parameter A are combined falls in the fourth range (e.g. the fourth range is 28-29), the type of the SSB is determined as the NCD-SSB, in this case, the target CD-SSB may be acquired according to the NCD-SSB, and then cell access is performed according to the target CD-SSB.

It is understandable that, a specific value range of the second range may be determined according to the SCSes respectively corresponding to the SSB and the CORESET#0 in an actual situation.

In the above implementation process, the indication parameter is obtained by combining the sub-carrier offset parameter $K_{SSB}$ and the extended parameter A, such that the type of the SSB may be preliminarily determined directly according to the value range of the extended parameter A.

Specifically, in this embodiment, a spacing between two adjacent GSCN$_{CD-SSB}$s may be configured to M-1, and then a spacing between two adjacent $N_{GSCN}^{offset}$s is M-1. Based on this, $N_{GSCN}^{offset}$ may be determined according to the following formula.

$$\left| N_{GSCN}^{offset} \right| = M \times (16 \times controlResourceSetZero + searchSpaceZero) + S$$

A value of S falls in [1, M], and a control resource set zero (controlResourceSetZero) and a search space zero (searchSpaceZero) are included in the pdcch-configSIB1 and respectively occupy 4 bits.

Therefore, when the number of the synch rasters in the band is greater than 256, this embodiment may adapt changes in the number of the synch rasters in the band while the configuration of the PDCCH-configSIB1 and the like corresponding to the SSB remains unchanged, so as to change the value range of the $N_{GSCN}^{offset}$. Furthermore, a mapping relationship of two groups between the pdcch-configSIB1 and the $N_{GSCN}^{offset}$ may be indicated by only configuring two values of the $K_{SSB}$, and then the value of the $N_{GSCN}^{offset}$ may be determined based on the $K_{SSB}$ corresponding to the searched NCD-SSB and the pdcch-configSIB1, so as to determine a frequency domain position of the GSCN$_{CD-SSB}$,

thereby realizing cell access.

The method for determining the frequency domain position of this embodiment is suitable for a situation that the number of the synch rasters in the band is greater than 256. In this case, a lowest frequency of the band may be not less than 52.6 GHz. For example, the method for determining a frequency domain position of this embodiment is applicable to a band of 52.6 GHz-71 GHz, according to a session conclusion of RAN1 105e, within an FR of 52.6 GHz-71 GHz, the number of the synch rasters cannot exceed 665.

For example, for the FR of 52.6 GHz-71 GHz, when the number of the synch rasters does not exceed 512, M=2, such that the value of the $\left| N_{GSCN}^{offset} \right|$ falls in [1,512], the value of the $\left| N_{GSCN}^{offset} \right|$ is extended from [1, 256] to [1, 512], and the situation that the maximum number of the synch rasters in the band is 512 may be supported; and a relationship among the $K_{SSB}$, the pdcch-configSIB1, and the $N_{GSCN}^{offset}$ may be shown in Table 3.

Table 3:

| Relationship (M = 2) among $K_{SSB}$, pdcch-configSIB1, and $N_{GSCN}^{offset}$ | | |
|---|---|---|
| $K_{SSB}$ | 16×controlResourceSetZero+searchSpaceZero | $N_{GSCN}^{offset}$ |
| $P_1$ | 0,1,...,255 | 1, 2,..., 512 |
| $P_2$ | 0, 1,..., 255 | -1, -2,..., -512 |
| $P_3$ | 0, 1,..., 255 | Reserved, Reserved,..., Reserved |

When the value of S is 1, according to the searched NCD-SSB, if controlResourceSetZero is configured to 1111 and searchSpaceZero is configured to 1111, and when the $K_{SSB}$ is configured to $P_1$, $N_{GSCN}^{offset} = 511$.

When the value of S is 2, according to the searched NCD-SSB, if controlResourceSetZero is configured to 1111 and searchSpaceZero is configured to 1111, and when the $K_{SSB}$ is configured to $P_1$, $N_{GSCN}^{offset} = 512$.

For another example, for the FR of 52.6 GHz-71 GHz, when the number of the synch rasters does not exceed 665, M=3, such that the value of the $\left| N_{GSCN}^{offset} \right|$ falls in [1, 768], the value of the $\left| N_{GSCN}^{offset} \right|$ is extended from [1, 256] to [1, 768], and the situation that the maximum number of the synch rasters in the band is 768 may be supported; and a relationship among the $K_{SSB}$, the pdcch-configSIB1, and the $N_{GSCN}^{offset}$ may be shown in Table 4.

Table 4:

| Relationship (M = 3) among $K_{SSB}$, pdcch-configSIB1, and $N_{GSCN}^{offset}$ | | |
|---|---|---|
| $K_{SSB}$ | 16×controlResourceSetZero+searchSpaceZero | $N_{GSCN}^{offset}$ |
| $P_1$ | 0, 1,..., 255 | 1, 2,..., 768 |
| $P_2$ | 0, 1,..., 255 | -1, -2,..., -768 |
| $P_3$ | 0, 1,..., 255 | Reserved, Reserved,..., Reserved |

When the value of S is 1, according to the searched NCD-SSB, if controlResourceSetZero is configured to 1000 and searchSpaceZero is configured to 0001, and when the $K_{SSB}$ is configured to $P_1$, $N_{GSCN}^{offset} = 388$.

When the value of S is 2, according to the searched NCD-SSB, if controlResourceSetZero is configured to 1000 and searchSpaceZero is configured to 0001, and when the $K_{SSB}$ is configured to $P_1$, $N_{GSCN}^{offset} = 389$ .

When the value of S is 3, according to the searched NCD-SSB, if controlResourceSetZero is configured to 1000 and searchSpaceZero is configured to 0001, and when the $K_{SSB}$ is configured to $P_1$, $N_{GSCN}^{offset} = 390$ .

In this embodiment, when the number of synch rasters in the band is greater than 256, the direct expansion of the value range of the $N_{GSCN}^{offset}$ is realized based on the number of the synch rasters in the band; that is, the indication of the offset $N_{GSCN}^{offset}$ between the frequency domain positions of the synch rasters where the CD-SSB and the NCD-SSB are located may be implemented in the band, such that the frequency domain position of the corresponding CD-SSB may be determined based on the searched NCD-SSB, thereby shortening the time for the terminal device to acquire the CD-SSB, and shortening cell access delay of the terminal device.

**Embodiment 2:**

This embodiment provides a cell broadcasting method. The cell broadcasting method of this embodiment is applicable to network devices such as base stations, and may specifically include steps of broadcasting an SSB in a band.

In this embodiment, in a case that the SSB is an NCD-SSB, an absolute value of a frequency domain position offset $\left| N_{GSCN}^{offset} \right|$ falls in [1, 256×M], a $N_{GSCN}^{offset}$ indicates an offset between a frequency domain position of a synch rasters where a CD-SSB is located and a frequency domain position of a synch rasters where the NCD-SSB is located, M is an integer not less than 2, a value of the number of the synch rasters in the band falls in (256×(M-1), 256×M], and a minimum frequency value of the band is not less than 52.6 GHz.

In this embodiment, when the number of the synch rasters in the band is greater than 256, the direct expansion of a value range of the $N_{GSCN}^{offset}$ is realized based on the number of the synch rasters in the band; that is, the indication of the offset $N_{GSCN}^{offset}$ between the frequency domain positions of the synch rasters where the CD-SSB and the NCD-SSB are located may be implemented in the band.

$$GSCN_{CD-SSB} = GSCN_{NCD-SSB} + N_{GSCN}^{offset}$$

Furthermore, in this embodiment, , the indication from the synch raster where the searched NCD-SSB is located to the synch raster where the CD-SSB is located may be realized when the number of the synch rasters in the band is greater than 256, such that the time for the terminal device to acquire the CD-SSB may be shortened, and cell accessing delay of the terminal device is shortened.

Further, in this embodiment, whether the broadcast SSB is the NCD-SSB may be indicated according to a $K_{SSB}$ for representing a sub-carrier offset between sub-carrier zero of a CRB and sub-carrier zero of the SSB, and when the broadcast SSB is the NCD-SSB, an actual direction of the frequency domain position offset may be further determined according to a value of the $K_{SSB}$. For example, when $K_{SSB}=P_1$, a value range of the is [1, 256×M]; and when $K_{SSB} = P_2$, the value range of the $N_{GSCN}^{offset}$ is [-256×M, -1]. Therefore, based on this embodiment, only two values of the $K_{SSB}$ may be configured to indicate a mapping relationship of two groups between a pdcch-configSIB1 and the $N_{GSCN}^{offset}$ .

In some embodiments, the SSB is different from an SCS of a corresponding type0-PDCCH, the SSB includes a sub-carrier offset parameter $K_{SSB}$ indicating a sub-carrier offset of the SSB, and a value of the sub-carrier offset parameter $K_{SSB}$ is configured according to a difference between an SCS of the SSB and the SCS of the corresponding type0-PDCCH.

In a case that the value of the sub-carrier offset parameter $K_{SSB}$ falls in [0, $p_0$], it indicates that a type of the SSB is a CD-SSB, and the $p_0$ is a positive integer, and a value of the $p_0$ is determined according to the difference between the SCS of the SSB and the SCS of the corresponding type0-PDCCH.

In a case that the value of the sub-carrier offset parameter $K_{SSB}$ falls in [$p_0$+1, $p_0$+2M], it indicates that the type of the SSB is the NCD-SSB.

In some embodiments, in a case that the type of the SSB is the NCD-SSB, the $N_{GSCN}^{offset}$ is determined according to the sub-carrier offset parameter $K_{SSB}$ corresponding to the NCD-SSB and a PDCCH-configSIB1.

In a case that the sub-carrier offset parameter $K_{SSB}$ meets $K_{SSB} = p_0 + 1 + i$, the value of the corresponding $N_{GSCN}^{offset}$ falls in [256×i+1, 256×i+1, i is an integer, and 0≤i≤M-1.

In a case that the sub-carrier offset parameter $K_{SSB}$ meets $K_{SSB} = p_0 + 1 + i + M$, the value of the corresponding $N_{GSCN}^{offset}$ falls in [-256×(i+1), -(256×i+1)].

And/or, the value of the $p_0$ is a maximum integer value less than 12/j, and j indicates a ratio of the SCS of the SSB to the SCS of the corresponding type0-PDCCH.

In some embodiments, the SSB includes an indication parameter for indicating the type of the SSB, and the indication parameter is obtained by combining the sub-carrier offset parameter $K_{SSB}$ and an extended parameter A.

In a case that a value of the indication parameter falls in a first range, the type of the SSB is determined as a CD-SSB, and the CD-SSB is demodulated to attempt to initiate cell access, and the value of the indication parameter represents a sub-carrier offset of the SSB.

In a case that the value of the indication parameter falls in a second range, the type of the SSB is determined as the NCD-SSB.

In some embodiments, in a case that the type of the SSB is the NCD-SSB and the value of the indication parameter is $p_1$+i, the value of the corresponding $N_{GSCN}^{offset}$ falls in [256×i+1, 256×(i+1)], and the $p_1$ represents a minimum value of the indication parameter in a case that the type of the SSB is the NCD-SSB, and i is an integer, and 0≤i≤M-1.

In a case that the type of the SSB is the NCD-SSB and the value of the indication parameter is $p_1$+i+M, the value of the corresponding $N_{GSCN}^{offset}$ falls in [-256×(i+1), -(256×i+1)].

In some embodiments, the SSB includes an indication parameter for indicating the type of the SSB, and the indication parameter is obtained by combining the sub-carrier offset parameter $K_{SSB}$ and an extended parameter A.

In a case that a value of the extended parameter A is null or falls in a third range, and in a case that a value of the sub-carrier offset parameter $K_{SSB}$ or a value after the sub-carrier offset parameter $K_{SSB}$ and the extended parameter A are combined falls in a fourth range, the type of the SSB is determined as a CD-SSB, and the CD-SSB is demodulated, and the value of the sub-carrier offset parameter $K_{SSB}$ represents a sub-carrier offset of the SSB.

In a case that the value of the extended parameter A falls in a fifth range, and in a case that the value of the sub-carrier offset parameter $K_{SSB}$ or the value after the sub-carrier offset parameter $K_{SSB}$ and the extended parameter A are combined falls in a sixth range, the type of the SSB is determined as the NCD-SSB.

In some embodiments, in a case that the type of the SSB is the NCD-SSB and the value of the indication parameter is $p_2$+i, the value of the corresponding $N_{GSCN}^{offset}$ falls in [256×i+1, 256×(i+1)], and the $p_2$ represents a minimum value of the sub-carrier offset parameter $K_{SSB}$ or a minimum value after the sub-carrier offset parameter $K_{SSB}$ and the extended parameter A are combined in the case that the type of the SSB is the NCD-SSB, and i is an integer, and 0≤i≤M-1.

In a case that the type of the SSB is the NCD-SSB and the value of the indication parameter is $p_2$+i+M, the value of the corresponding $N_{GSCN}^{offset}$ falls in [-256×(i+1), -(256×i+1)].

Specifically, in this embodiment, the CD-SSB may be broadcast by M-1 synch rasters as a spacing in the band, that is, a spacing between two adjacent $GSCN_{CD-SSB}$s is configured to M-1, such that a spacing between two adjacent $N_{GSCN}^{offset}$s is M-1. Based on this, $\left|N_{GSCN}^{offset}\right|$ may be determined according to the following formula.

$$\left|N_{GSCN}^{offset}\right| = M \times (16 \times controlResourceSetZero + searchSpaceZero) + S$$

A value of S falls in [1, M], and controlResourceSetZero and searchSpaceZero are included in the pdcch-configSIB1 and respectively occupy 4 bits.

Therefore, when the number of the synch rasters in the band is greater than 256, this embodiment may adapt changes in the number of the synch rasters in the band while the configuration of the pdcch-configSIB1 and the like corresponding to the SSB remains unchanged, so as to change the value range of the $N_{GSCN}^{offset}$. Furthermore, a mapping relationship of two groups between the pdcch-configSIB1 and the $N_{GSCN}^{offset}$ may be indicated by only configuring two values of the $K_{SSB}$, and then the value of the $N_{GSCN}^{offset}$ may be determined based on the $K_{SSB}$ corresponding to the searched NCD-SSB and the pdcch-configSIB1, so as to determine a frequency domain position of the $GSCN_{CD\text{-}SSB}$, thereby realizing cell access.

The cell broadcasting method of this embodiment is suitable for a situation that the number of the synch rasters in the band is greater than 256. In this case, a lowest frequency of the band may be not less than 52.6 GHz. For example, the cell broadcasting method of this embodiment is applicable to a band of 52.6 GHz-71 GHz, according to a session conclusion of RAN1 105e, within an FR of 52.6 GHz-71 GHz, the number of the synch rasters cannot exceed 665.

For example, for the FR of 52.6 GHz-71 GHz, when the number of the synch rasters does not exceed 512, M=2, such that the value of the $\left|N_{GSCN}^{offset}\right|$ falls in [1, 512], the value of the $\left|N_{GSCN}^{offset}\right|$ is extended from [1, 256] to [1, 512], and the situation that the maximum number of the synch rasters in the band is 512 may be supported; and a relationship among the $K_{SSB}$, the pdcch-configSIB1, and the $N_{GSCN}^{offset}$ is also shown in Table 3.

Table 3:

| Relationship (M = 2) among $K_{SSB}$, pdcch-configSIB1, and $N_{GSCN}^{offset}$ | | |
|---|---|---|
| $K_{SSB}$ | 16×controlResourceSetZero+searchSpaceZero | $N_{GSCN}^{\text{offset}}$ |
| $P_1$ | 0, 1,..., 255 | 1, 2,..., 512 |
| $P_2$ | 0, 1,..., 255 | -1, -2,..., -512 |
| $P_3$ | 0, 1,..., 255 | Reserved, Reserved,..., Reserved |

When the value of S is 1, according to the searched NCD-SSB, if controlResourceSetZero is configured to 1111 and searchSpaceZero is configured to 1111, and when the $K_{SSB}$ is configured to $P_1$, $N_{GSCN}^{offset} = 511$.

When the value of S is 2, according to the searched NCD-SSB, if controlResourceSetZero is configured to 1111 and searchSpaceZero is configured to 1111, and when the $K_{SSB}$ is configured to $P_1$, $N_{GSCN}^{offset} = 512$.

For another example, for the FR of 52.6 GHz-71 GHz, when the number of the synch rasters does not exceed 665, M=3, such that the value of the $\left|N_{GSCN}^{offset}\right|$ falls in [1, 768], the value of the $\left|N_{GSCN}^{offset}\right|$ is extended from [1, 256] to [1, 768], and the situation that the maximum number of the synch rasters in the band is 768 may be supported; and a relationship among the $K_{SSB}$, the pdcch-configSIB1, and the $N_{GSCN}^{offset}$ is also shown in Table 4.

Table 4:

| Relationship (M = 3) among $K_{SSB}$, pdcch-configSIB1, and $N_{GSCN}^{offset}$ | | |
|---|---|---|
| $K_{SSB}$ | 16×controlResourceSetZero+searchSpaceZero | $N_{GSCN}^{\text{offset}}$ |
| $P_1$ | 0, 1,..., 255 | 1, 2,..., 768 |

(continued)

| Relationship (M = 3) among $K_{SSB}$, pdcch-configSIB1, and $N_{GSCN}^{offset}$ | | |
|---|---|---|
| $K_{SSB}$ | 16×controlResourceSetZero+searchSpaceZero | $N_{GSCN}^{\text{offset}}$ |
| $P_2$ | 0, 1,..., 255 | -1, -2,..., -768 |
| $P_3$ | 0, 1,..., 255 | Reserved, Reserved,..., Reserved |

When the value of S is 1, according to the searched NCD-SSB, if controlResourceSetZero is configured to 1000 and searchSpaceZero is configured to 0001, and when the $K_{SSB}$ is configured to $P_1$, $N_{GSCN}^{offset} = 388$.

When the value of S is 2, according to the searched NCD-SSB, if controlResourceSetZero is configured to 1000 and searchSpaceZero is configured to 0001, and when the $K_{SSB}$ is configured to $P_1$, $N_{GSCN}^{offset} = 389$.

When the value of S is 3, according to the searched NCD-SSB, if controlResourceSetZero is configured to 1000 and searchSpaceZero is configured to 0001, and when the $K_{SSB}$ is configured to $P_1$, $N_{GSCN}^{offset} = 390$.

In this embodiment, when the number of synch rasters in the band is greater than 256, the direct expansion of the value range of the $N_{GSCN}^{offset}$ is realized based on the number of the synch rasters in the band; that is, the indication of the offset $N_{GSCN}^{offset}$ between the frequency domain positions of the synch rasters where the CD-SSB and the NCD-SSB are located may be implemented in the band, such that the terminal device may determine the frequency domain position of the corresponding CD-SSB based on the searched NCD-SSB, thereby shortening the time for the terminal device to acquire the CD-SSB, and shortening cell access delay of the terminal device.

The content in this embodiment corresponds to the same as a method of a network side or a method on a terminal side, such that the same parts will not be described herein again.

**Embodiment 3:**

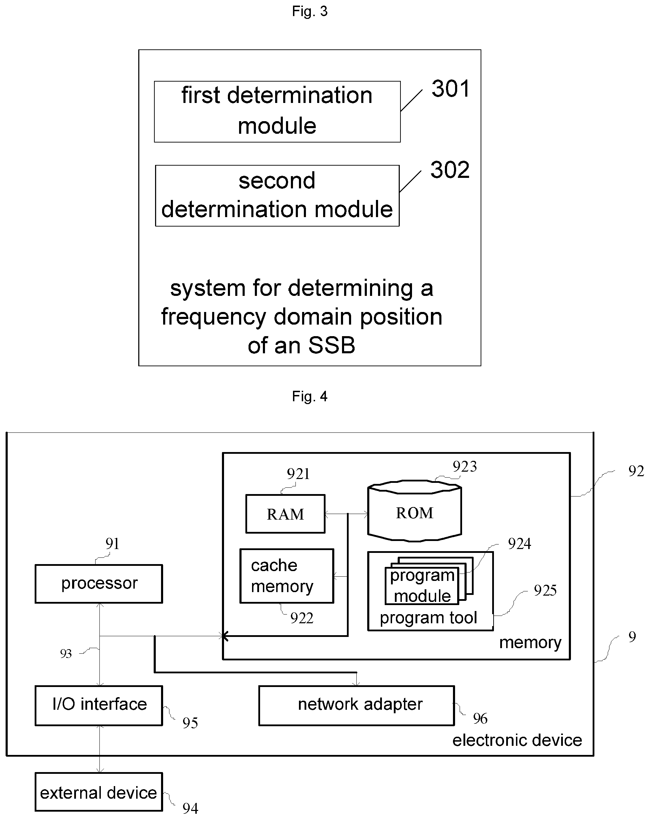

This embodiment provides a system for determining a frequency domain position of an SSB, and the system for determining a frequency domain position of this embodiment is applicable to terminal devices such as mobile phones, tablet computers, wearable devices, etc. Fig. 3 shows a schematic diagram of modules of the system for determining a frequency domain position according to this embodiment. Referring to Fig. 3, the system for determining the frequency domain position of this embodiment includes:

a first determination module 301. configured to, in a case that an NCD-SSB is searched in a band, determine a frequency domain position offset $N_{GSCN}^{offset}$ ;

a second determination module 302, configured to, according to the frequency domain position GSCN$_{NCD-SSB}$ of a synch raster where the NCD-SSB is located and the $N_{GSCN}^{offset}$ , determine the frequency domain position GSCN$_{CD-SSB}$ of the synch raster where the CD-SSB is located.

In this embodiment, the $N_{GSCN}^{offset}$ indicates an offset between a frequency domain position of a synch raster where a Cell Define SSB (CD-SSB) is located and a frequency domain position of a synch raster where the NCD-SSB is located , a value of $\left| N_{GSCN}^{offset} \right|$ falls in [1, 256×M], M is an integer not less than 2, and a value of the number of synch rasters in the band falls in (256×(M-1), 256×M).

In this embodiment, when the number of the synch rasters in the band is greater than 256, the direct expansion of a value range of the $N_{GSCN}^{offset}$ is realized based on the number of the synch rasters in the band; that is, the indication of the offset $N_{GSCN}^{offset}$ between the frequency domain positions of the synch rasters where the CD-SSB and the NCD-SSB are located may be implemented in the band.

Furthermore, in this embodiment, $GSCN_{CD-SSB} = GSCN_{NCD-SSB} + N_{GSCN}^{offset}$, the indication from the synch raster where the searched NCD-SSB is located to the synch raster where the corresponding CD-SSB is located is realized when the number of the synch rasters in the band is greater than 256, such that the time for the terminal device to acquire the CD-SSB may be shortened, and cell accessing delay of the terminal device is shortened.

Further, in this embodiment, the first determination module 301 may determine, according to a sub-carrier offset parameter $K_{SSB}$ for representing a sub-carrier offset between a sub-carrier zero of a CRB and a sub-carrier zero of the SSB, whether the searched SSB is the NCD-SSB, and may further determine, in a case that the searched SSB is the NCD-SSB, an actual direction of the frequency domain position offset according to a value of the $K_{SSB}$. For example, in a case that $K_{SSB} = P_1$, a value range of the $N_{GSCN}^{offset}$ is [1, 256×M]; and in a case that $K_{SSB} = P_2$, the value range of the $N_{GSCN}^{offset}$ is [-256×M, -1]. Therefore, based on this embodiment, only two values of the $K_{SSB}$ may be configured to indicate a mapping relationship of two groups between a pdcch-configSIB1 and the $N_{GSCN}^{offset}$.

Specifically, in this embodiment, a spacing between two adjacent CD-SSBs may be configured to M-1, such that the second determination module 302 determines a spacing between two adjacent $GSCN_{CD-SSB}$s obtained as M-1, and then a spacing between two adjacent $N_{GSCN}^{offset}$s as M-1. Based on this, the first determination module 301 may determine $\left| N_{GSCN}^{offset} \right|$ according to the following formula.

$$\left| N_{GSCN}^{offset} \right| = M \times (16 \times controlResourceSetZero + searchSpaceZero) + S$$

A value of S falls in [1, M], and a controlResourceSetZero and a searchSpaceZero are included in the pdcch-configSIB1 and respectively occupy 4 bits.

Therefore, when the number of the synch rasters in the band is greater than 256, this embodiment may adapt changes in the number of the synch rasters in the band while the configuration of the pdcch-configSIB1 and the like corresponding to the SSB remains unchanged, so as to change the value range of the $N_{GSCN}^{offset}$. Furthermore, a mapping relationship of two groups between the pdcch-configSIB1 and the $N_{GSCN}^{offset}$ may be indicated by only configuring two values of the $K_{SSB}$, and then the value of the $N_{GSCN}^{offset}$ may be determined based on the $K_{SSB}$ corresponding to the searched NCD-SSB and the pdcch-configSIB1, so as to determine a frequency domain position of the $GSCN_{CD-SSB}$, thereby realizing cell access.

The system for determining the frequency domain position of this embodiment is suitable for a situation that the number of the synch rasters in the band is greater than 256. In this case, a lowest frequency of the band may be not less than 52.6 GHz. For example, the system for determining a frequency domain position of this embodiment is applicable to a band of 52.6 GHz-71 GHz, according to a session conclusion of RAN1 105e, within an FR of 52.6 GHz-71 GHz, the number of the synch rasters cannot exceed 665.

For example, for the FR of 52.6 GHz-71 GHz, when the number of the synch rasters does not exceed 512, M=2, such that the value of the $\left| N_{GSCN}^{offset} \right|$ falls in [1,512], the value of the $\left| N_{GSCN}^{offset} \right|$ is extended from [1, 256] to [1, 512], and the situation that the maximum number of the synch rasters in the band is 512 may be supported; and a relationship among the $K_{SSB}$, the pdcch-configSIB1, and the $N_{GSCN}^{offset}$ is also shown in Table 3.

Table 3:

| Relationship (M = 2) among $K_{SSB}$, pdcch-configSIB1, and $N_{GSCN}^{offset}$ | | |
|---|---|---|
| $K_{SSB}$ | 16×controlResourceSetZero+searchSpaceZero | $N_{GSCN}^{offset}$ |
| $P_1$ | 0, 1,..., 255 | 1, 2,..., 512 |
| $P_2$ | 0, 1,..., 255 | -1, -2,..., -512 |
| $P_3$ | 0, 1,..., 255 | Reserved, Reserved,..., Reserved |

When the value of S is 1, according to the searched NCD-SSB, if controlResourceSetZero is configured to 1111 and searchSpaceZero is configured to 1111, and when the $K_{SSB}$ is configured to $P_1$, $N_{GSCN}^{offset} = 511$.

When the value of S is 2, according to the searched NCD-SSB, if controlResourceSetZero is configured to 1111 and searchSpaceZero is configured to 1111, and when the $K_{SSB}$ is configured to $P_1$, $N_{GSCN}^{offset} = 512$.

For another example, for the FR of 52.6 GHz-71 GHz, when the number of the synch rasters does not exceed 665, M=3, such that the value of the $\left|N_{GSCN}^{offset}\right|$ falls in [1, 768], the value of the $\left|N_{GSCN}^{offset}\right|$ is extended from [1, 256] to [1, 768], and the situation that the maximum number of the synch rasters in the band is 768 may be supported; and a relationship among the $K_{SSB}$, the pdcch-configSIB1, and the $N_{GSCN}^{offset}$ is also shown in Table 4.

Table 4:

| Relationship (M = 3) among $K_{SSB}$, pdcch-configSIB1, and $N_{GSCN}^{offset}$ | | |
|---|---|---|
| $K_{SSB}$ | 16×controlResourceSetZero+searchSpaceZero | $N_{GSCN}^{offset}$ |
| $P_1$ | 0, 1,..., 255 | 1, 2,..., 768 |
| $P_2$ | 0, 1,..., 255 | -1, -2,..., -768 |
| $P_3$ | 0, 1,..., 255 | Reserved, Reserved,..., Reserved |

When the value of S is 1, according to the searched NCD-SSB, if controlResourceSetZero is configured to 1000 and searchSpaceZero is configured to 0001, and when the $K_{SSB}$ is configured to $P_1$, $N_{GSCN}^{offset} = 388$.

When the value of S is 2, according to the searched NCD-SSB, if controlResourceSetZero is configured to 1000 and searchSpaceZero is configured to 0001, and when the $K_{SSB}$ is configured to $P_1$, $N_{GSCN}^{offset} = 389$.

When the value of S is 3, according to the searched NCD-SSB, if controlResourceSetZero is configured to 1000 and searchSpaceZero is configured to 0001, and when the $K_{SSB}$ is configured to $P_1$, $N_{GSCN}^{offset} = 390$.

In this embodiment, when the number of synch rasters in the band is greater than 256, the direct expansion of the value range of the $N_{GSCN}^{offset}$ is realized based on the number of the synch rasters in the band; that is, the indication of the offset $N_{GSCN}^{offset}$ between the frequency domain positions of the synch rasters where the CD-SSB and the NCD-SSB are located may be implemented in the band, such that the frequency domain position of the corresponding CD-SSB may be determined based on the searched NCD-SSB, thereby shortening the time for the terminal device to acquire the CD-SSB, and shortening cell access delay of the terminal device.

The content in this embodiment corresponds to the same as a method of a network side or a method on a terminal side, such that the same parts will not be described herein again.

**Embodiment 4:**

This embodiment provides a cell broadcasting system. The cell broadcasting system of this embodiment is applicable to network devices such as base stations, and may specifically include a broadcasting module configured to broadcast an SSB in a band.

In this embodiment, in a case that the SSB is an NCD-SSB, an absolute value of a frequency domain position offset $\left|N_{GSCN}^{offset}\right|$ falls in [1, 256×M], the $N_{GSCN}^{offset}$ indicates an offset between a frequency domain position of a synch rasters where a CD-SSB is located and a frequency domain position of a synch rasters where the NCD-SSB is located, M is an integer not less than 2, and a value of the number of the synch rasters in the band falls in (256×(M-1), 256×M].

In this embodiment, when the number of the synch rasters in the band is greater than 256, the direct expansion of a value range of the $N_{GSCN}^{offset}$ is realized based on the number of the synch rasters in the band; that is, the indication of the offset $N_{GSCN}^{offset}$ between the frequency domain positions of the synch rasters where the CD-SSB and the NCD-SSB are located may be implemented in the band.

$$GSCN_{CD-SSB} = GSCN_{NCD-SSB} + N_{GSCN}^{offset}$$

Furthermore, in this embodiment, , the indication from the synch raster where the searched NCD-SSB is located to the synch raster where the CD-SSB is located may be realized when the number of the synch rasters in the band is greater than 256, such that the time for the terminal device to acquire the CD-SSB may be shortened, and cell accessing delay of the terminal device is shortened.

Further, in this embodiment, whether the broadcast SSB is the NCD-SSB may be indicated according to a parameter $K_{SSB}$ for representing a sub-carrier offset between sub-carrier zero of a CRB and sub-carrier zero of the SSB, and when the broadcast SSB is the NCD-SSB, an actual direction of the frequency domain position offset may be further determined according to a value of the $K_{SSB}$. For example, when $K_{SSB}=P_1$, a value range of the $N_{GSCN}^{offset}$ is [1, 256×M]; and when $K_{SSB} = P_2$, the value range of the $N_{GSCN}^{offset}$ is [-256×M, -1]. Therefore, based on this embodiment, only two values of the $K_{SSB}$ may be configured to indicate a mapping relationship of two groups between a pdcch-configSIB1 and the $N_{GSCN}^{offset}$.

In this embodiment, the broadcasting module may broadcast the CD-SSB by M-1 synch rasters as a spacing in the band, that is, a spacing between two adjacent $GSCN_{CD-SSB}$s is configured to M-1, such that a spacing between two adjacent $N_{GSCN}^{offset}$s is M-1. Based on this, $\left|N_{GSCN}^{offset}\right|$ may be determined according to the following formula.

$$\left|N_{GSCN}^{offset}\right| = M \times (16 \times controlResourceSetZero + searchSpaceZero) + S$$

A value of S falls in [1, M], and a controlResourceSetZero and a searchSpaceZero are included in the pdcch-configSIB1 and respectively occupy 4 bits.

Therefore, when the number of the synch rasters in the band is greater than 256, this embodiment may adapt changes in the number of the synch rasters in the band while the configuration of the pdcch-configSIB1 and the like corresponding to the SSB remains unchanged, so as to change the value range of the $N_{GSCN}^{offset}$. Furthermore, a mapping relationship of two groups between the pdcch-configSIB1 and the $N_{GSCN}^{offset}$ may be indicated by only configuring two values of the $K_{SSB}$, and then the value of the $N_{GSCN}^{offset}$ may be determined based on the $K_{SSB}$ corresponding to the searched NCD-SSB and the pdcch-configSIB1, so as to determine a frequency domain position of the $GSCN_{CD-SSB}$, thereby realizing cell access.

The cell broadcasting system of this embodiment is suitable for a situation that the number of the synch rasters in the band is greater than 256. In this case, a lowest frequency of the band may be not less than 52.6 GHz. For example, the cell broadcasting system of this embodiment is applicable to a band of 52.6 GHz-71 GHz, according to a session conclusion of RAN1 105e, within an FR of 52.6 GHz-71 GHz, the number of the synch rasters cannot exceed 665.

For example, for the FR of 52.6 GHz-71 GHz, when the number of the synch rasters does not exceed 512, M=2, such that the value of the $\left|N_{GSCN}^{offset}\right|$ falls in [1, 512], the value of the $\left|N_{GSCN}^{offset}\right|$ is extended from [1, 256] to [1, 512], and the situation that the maximum number of the synch rasters in the band is 512 may be supported; and a relationship among the $K_{SSB}$, the pdcch-configSIB1, and the $N_{GSCN}^{offset}$ is also shown in Table 3.

Table 3:

| Relationship (M = 2) among $K_{SSB}$, pdcch-configSIB1, and $N_{GSCN}^{offset}$ | | |
|---|---|---|
| $K_{SSB}$ | 16×controlResourceSetZero+searchSpaceZero | $N_{GSCN}^{offset}$ |
| $P_1$ | 0, 1,..., 255 | 1, 2,..., 512 |
| $P_2$ | 0, 1,..., 255 | -1, -2,..., -512 |
| $P_3$ | 0, 1,..., 255 | Reserved, Reserved,..., Reserved |

When the value of S is 1, according to the searched NCD-SSB, if controlResourceSetZero is configured to 1111 and searchSpaceZero is configured to 1111, and when the $K_{SSB}$ is configured to $P_1$, $N_{GSCN}^{offset} = 511$.

When the value of S is 2, according to the searched NCD-SSB, if controlResourceSetZero is configured to 1111 and searchSpaceZero is configured to 1111, and when the $K_{SSB}$ is configured to $P_1$, $N_{GSCN}^{offset} = 512$.

For another example, for the FR of 52.6 GHz-71 GHz, when the number of the synch rasters does not exceed 665, M=3, such that the value of the $\left|N_{GSCN}^{offset}\right|$ falls in [1, 768], the value of the $\left|N_{GSCN}^{offset}\right|$ is extended from [1, 256] to [1, 768], and the situation that the maximum number of the synch rasters in the band is 768 may be supported; and a relationship among the $K_{SSB}$, the pdcch-configSIB1, and the $N_{GSCN}^{offset}$ is also shown in Table 4.

Table 4:

| Relationship (M = 3) among $K_{SSB}$, pdcch-configSIB1, and $N_{GSCN}^{offset}$ | | |
|---|---|---|
| $K_{SSB}$ | 16×controlResourceSetZero+searchSpaceZero | $N_{GSCN}^{offset}$ |
| $P_1$ | 0, 1,..., 255 | 1, 2,..., 768 |
| $P_2$ | 0, 1,..., 255 | -1, -2,..., -768 |
| $P_3$ | 0, 1,..., 255 | Reserved, Reserved,..., Reserved |

When the value of S is 1, according to the searched NCD-SSB, if controlResourceSetZero is configured to 1000 and searchSpaceZero is configured to 0001, and when the $K_{SSB}$ is configured to $P_1$, $N_{GSCN}^{offset} = 388$.

When the value of S is 2, according to the searched NCD-SSB, if controlResourceSetZero is configured to 1000 and searchSpaceZero is configured to 0001, and when the $K_{SSB}$ is configured to $P_1$, $N_{GSCN}^{offset} = 389$ .

When the value of S is 3, according to the searched NCD-SSB, if controlResourceSetZero is configured to 1000 and searchSpaceZero is configured to 0001, and when the $K_{SSB}$ is configured to $P_1$, $N_{GSCN}^{offset} = 390$ .

In this embodiment, when the number of synch rasters in the band is greater than 256, the direct expansion of the value range of the $N_{GSCN}^{offset}$ is realized based on the number of the synch rasters in the band; that is, the indication of the offset $N_{GSCN}^{offset}$ between the frequency domain positions of synch rasters where the CD-SSB and the NCD-SSB are located may be implemented in the band, such that the terminal device may determine the frequency domain position of the corresponding CD-SSB based on the searched NCD-SSB, thereby shortening the time for the terminal device to acquire the CD-SSB, and shortening cell access delay of the terminal device.

The content in this embodiment corresponds to the same as a method of a network side or a method on a terminal side, such that the same parts will not be described herein again.

**Embodiment 5:**

This embodiment provides an electronic device. The electronic device may be expressed in the form of a computing device (e.g. may be a server device), and include a memory, a processor, and a computer program which is stored in the memory and executable on the processor. The process, when executing the computer program, may implement the method for determining the frequency domain position of the SSB provided in Embodiment 1, and in this case, the electronic device may be a terminal device such as a mobile phone, a tablet computer, a wearable device, etc.; or the process, when executing the computer program, may implement the cell broadcasting method provided in Embodiment 2, and in this case, the electronic device may be a network device such as a base station.

Fig. 4 shows a schematic diagram of a hardware structure of this embodiment. As shown in Fig. 4, the electronic device 9 specifically includes at least one processor 91, at least one memory 92, and a bus 93 configured to connect different system components (including the processor 91 and the memory 92).

The bus 93 includes a data bus, an address bus, and a control bus.

The memory 92 includes a transitory memory such as a Random Access Memory (RAM) 921 and/or a cache memory 922, and may further include a Read-Only Memory (ROM) 923.

The memory 92 further includes a program/practical tool 925 provided with a set of (at least one) program modules 924. Such program modules 924 include, but are not limited to, an operating system, one or more application programs, other program modules, and program data. Each of these examples, or a combination thereof, may include an implementation of a network environment.

The processor 91 executes various function applications and data processing by running the computer program stored in the memory 92, for example, implementing the method for determining the frequency domain position of the SSB provided in Embodiment 1 of the present disclosure, or implementing the cell broadcasting method provided in Embodiment 2.

The electronic device 9 may further communicate with one or more external devices 94 (e.g. a keyboard, a pointing device, etc.). Such communication may be performed by means of an Input/Output (I/O) interface 95. Furthermore, the electronic device 9 may further communicate with one or more networks (e.g. a Local Area Network (LAN), a Wide Area Network (WAN), and/or a public network, such as Internet) through a network adapter 96. The network adapter 96 communicates with other modules of the electronic device 9 through the bus 93. It is to be understood that, although not shown in the figure, other hardware and/or software modules may be used in combination with the electronic device 9, including, but not limited to: microcodes, device drives, redundant processors, external disk drive arrays, Redundant Arrays of Independent Disks (RAID) systems, tape drives, and data backup storage systems, etc.

It is to be noted that, although a plurality of units/modules or sub-units/modules of the electronic device are mentioned in the detailed description above, such division is only exemplary and not mandatory. Actually, according to an implementation of the present application, the features and functions of two or more units/modules described above may be specified in one unit/module. Otherwise, the features and functions of one unit/module described above may be further divided to be specified by the plurality of units/modules.

The content in this embodiment corresponds to the same as a method of a network side or a method on a terminal side, such that the same parts will not be described herein again.

**Embodiment 6:**

This embodiment provides a non-transitory computer readable storage medium, having a computer program stored thereon. When the program is executed by a processor, steps for implementing the method for determining the frequency domain position of the SSB provided in Embodiment 1, or steps for implementing the cell broadcasting method provided in Embodiment 2 is implemented.

The readable storage medium may more specifically include, but are not limited to: portable disks, hard disks, RAMs, ROMs, erasable programmable read-only memories, optical storage devices, magnetic storage devices, or any suitable combination of the foregoing.

In a possible implementation, the present disclosure may further be implemented in the form of a program product, including a program code. When the program code runs on the terminal device, the program code is used for causing the terminal device to execute steps for implementing the method for determining the frequency domain position of the SSB described in Embodiment 1, or steps for implementing the cell broadcasting method described in Embodiment 2.

The program code for executing the present disclosure may be compiled in any combination of one or more programming languages. The program code may be completely executed on a UE, partially executed on the UE, executed as an independent software package, executed partially on the UE and partially on a remote device, or executed completely on the remote device.

The content in this embodiment corresponds to the same as a method of a network side or a method on a terminal side, such that the same parts will not be described herein again.

**Embodiment 7:**

When the terminal device just starts up for cell search, the terminal device may only detect an SSB signal according to a band that is supported by operators and the terminal device for downlink time-frequency synchronization. A value of an NR Absolute Radio Frequency Channel Number ( NR-ARFCN for short, and NR-ARFCN is used for coding a frequency domain range of a reference frequency) has a large range due to small granularity of a global frequency raster, and if a blind test is directly performed according to the global frequency raster, synchronization delay is relatively large. Therefore, in order to effectively reduce synchronization delay of this process, the concept of the synch raster is defined, and a search range is limited through a GSCN. As shown in a table below, each synch raster corresponds one GSCN, and a formula for calculating the GSCN may be acquired through a third column in the table. It is to be noted that, the synch rasters within different band ranges have different granularity. Specifically, when a band is between 0 GHz and 3 GHz, the granularity of the synch raster is 50 kHz; when the band range is between 3 GHz and 24.25 GHz, the granularity of the synch raster is 1.44 MHz; and when the band range is between 24.25 GHz and 100 GHz, the granularity of the synch raster is 17.28 MHz.

For example, between 24.25 GHz and 100 GHz, when N=1, a frequency domain position of the synch raster is 24250.08+1*17.28 = 24267.36MHz, with a corresponding GSCN being 22257.

| Range of frequencies (MHz) | SSB frequency domain position $SS_{REF}$ | GSCN | Range of GSCN |
|---|---|---|---|
| 0-3000 | N*1200kHz+M*50kHz N=1:2499, M∈{1,3,5} (Note) | 3N+(M-3)/2 | 2-7498 |
| 3000-24250 | 3000MHz+N*1.44MHz, N=0:14756 | 7499+N | 7499-22255 |
| 24250-100000 | 24250.08MHz+N*17.28MHz N=0:4383 | 22256+N | 22256-26639 |

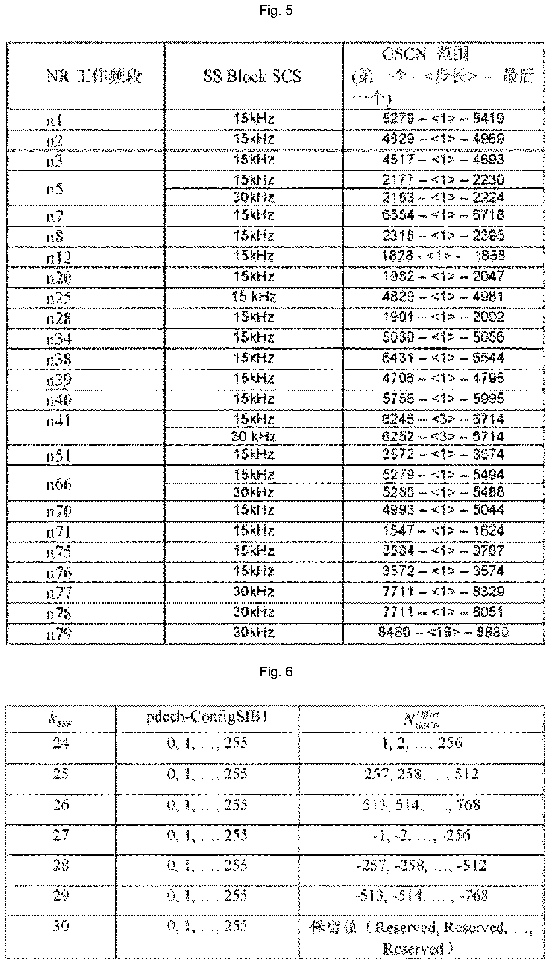

For the synch raster, at different bands, the distribution of the synch rasters in partial bands is determined through Fig. 5. For example, for a band n12, a number range of the synch rasters is 1828-1858, with a total of 31 synch rasters, and the numbers are GSCNs. The terminal device searches an SSB according to the position of the synch raster at a specific band, such that information of an MIB and an SIB1 may be obtained from the SSB.

The above SIB1 may also be referred to as Remaining Minimum System Information (RMSI). However, not all SSBs carry the corresponding RMSI. The RMSI may be used for instruct the terminal device to perform cell access. The terminal device needs to obtain the RMSI in the SSB when being about to access a cell. In order to make the terminal device able to learn whether the SSB carries the RMSI, it is defined that a sub-carrier offset parameter $K_{SSB}$ is used for indication, i.e. whether the SSB carries the corresponding RMSI is indicated through the sub-carrier offset parameter $K_{SSB}$. The sub-carrier offset parameter $K_{SSB}$ indicates a Resource Element-level (RE-level) offset between the SSB and a Control-Resource Set #0 (CORESET#0).

If the SSB carries the RMSI, the SSB may be referred to as a CD-SSB, and the terminal device may only perform cell access when scanning the CD-SSB; and if the SSB does not carry the RMSI, the SSB may be referred to as an NCD-SSB, i.e. the SSB may be divided into the CD-SSB and the NCD-SSB. The CD-SSB is mainly configured to achieve initial access of a cell, including RMSI for cell access; and the NCD-SSB is mainly configured to achieve other situations in addition to initial access of the cell, for example, measurement, and thus cannot support cell access of the terminal device.

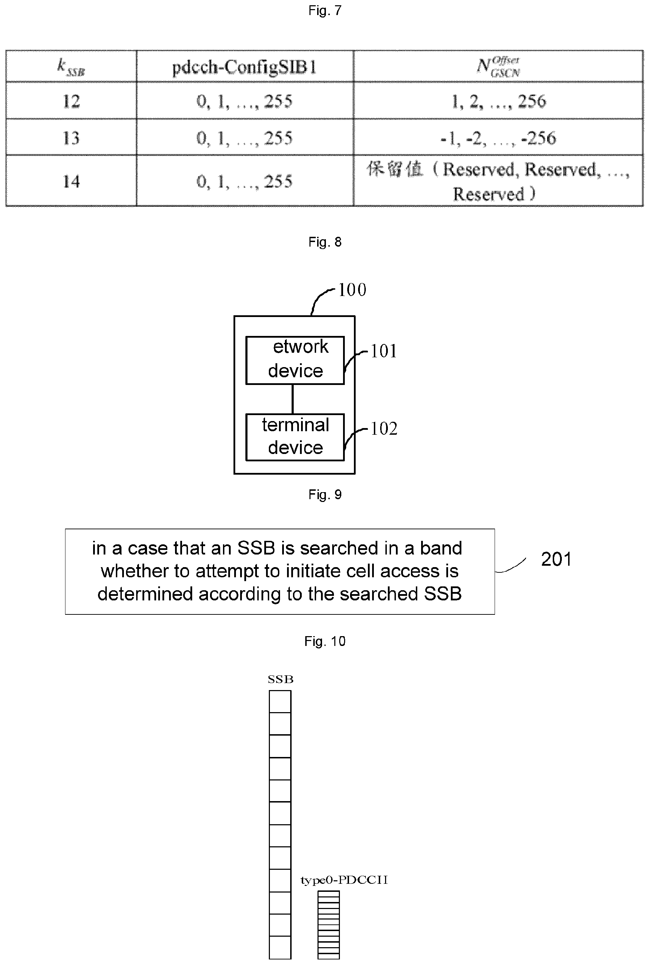

Under different FR of an NR system, information indicated by the sub-carrier offset parameter $K_{SSB}$ is different. As shown in Fig. 6, within an FR1 (450 MHz-6 GHz), the sub-carrier offset parameter $K_{SSB}$ includes 5 bits, and may indicate numerical values 0-31. When a value of the sub-carrier offset parameter $K_{SSB}$ is 24-29, it indicates that the type of the SSB is the NCD-SSB, and cell access cannot be performed currently and if the value of the sub-carrier offset parameter $K_{SSB}$ is 0-23, it indicates that the type of the SSB is the CD-SSB, and cell access may be performed. As shown in Fig. 7, within an FR2 (24.25 GHz-52.6 GHz), the sub-carrier offset parameter $K_{SSB}$ includes 4 bits, and may indicate numerical values 0-15. When the value of the sub-carrier offset parameter $K_{SSB}$ is 12-13, it indicates that the type of the SSB is the NCD-SSB, and when the value of the sub-carrier offset parameter $K_{SSB}$ is 0-11, it indicates that the type of the SSB is the CD-SSB.

It is to be understood that, a frequency domain position offset $N_{GSCN}^{offset}$ between the GSCN of the synch raster where a target CD-SSB is located and the GSCN of the synch raster where the NCD-SSB is located is indicated in combination with the sub-carrier offset parameter $K_{SSB}$ and a parameter pdcch-ConfigSIB1 in the MIB in Figs 6 and 7. That is to say, if, within the FR1, the terminal device analyzes the value of the sub-carrier offset parameter $K_{SSB}$ to be 24 to 29 from the currently searched SSB, or within the FR2, the terminal device analyzes the value of the sub-carrier offset parameter $K_{SSB}$ to be 12 to 13, the type of the current SSB is determined as the NCD-SSB, and in this case, the terminal device may determine an offset, i.e. the frequency domain position offset $N_{GSCN}^{offset}$, of the GSCN between the CD-SSB and the NCD-SSB according to controlResourceSetZero and searchSpaceZero in the parameter pdcch-ConfigSIB1 in the MIB. In this way, after the terminal device obtained the corresponding $N_{GSCN}^{offset}$, the GSCN of the synch raster where the target CD-SSB may be obtained through the frequency domain position offset $N_{GSCN}^{offset}$ in Figs 6 or 7 and the GSCN of the current NCD-SSB, so as to realize cell access.

For bands above 52.6 GHz, current SCSes that may be supported by a system are 120 kHz, 480 kHz, and 960 kHz. In an initial access process under an NR system architecture of Rel-17, in addition to supporting 120 kHz, 480 kHz may also be supported, i.e. the SSB in the initial access process, a type0-PDCCH, a PDSCH carrying an SIB1, Other System Information (OSI), and msg.2/4 in a PRACH process may all use 120 kHz or 480 kHz.

For the bands above 52.6 GHz, for example, 52.6 GHz-71 GHz are a new piece of bands, and are only defined as one band, such that, when an SCS of the SSB is 120kHz and 480kHz, the frequency domain position of the synch raster needs to be re-designed. In a practical application, within a band of 52.6 GHz-71 GHz, in regardless of the number of SCSes supported, the number of the synch rasters cannot exceed 665. That is to say, the number of the synch rasters above 52.6 GHz may exceed 256.

In order to adapt increased configuration of the number of the synch rasters, an extended parameter A is added in the present application. The type of the SSB is indicated by an indication parameter including the extended parameter A and the sub-carrier offset parameter $K_{SSB}$, so as to indicate the $N_{GSCN}^{offset}$ with a larger value range, such that, when the number of the synch rasters is configured to increase, the configuration of the sub-carrier offset parameter $K_{SSB}$ is not affected, and the $N_{GSCN}^{offset}$ exceeding an original range may also be indicated, and therefore, the terminal device may find a suitable CD-SSB through the NCD-SSB, thereby reducing cell accessing delay.

It is to be understood that, when the configuration of the number of the synch rasters corresponding to the FR1 or the FR2 changes, the present application may also be applied. For example, for the FR2, when the number of the synch rasters is greater than 256 and less than 512, $K_{SSB}$ = 12 may be configured to correspond to a value range [1, 256] of the $N_{GSCN}^{offset}$, $K_{SSB}$ = 13 corresponds to a value range [257, 512] of the $N_{GSCN}^{offset}$, $K_{SSB}$ = 14 corresponds to a value range [-256, -1] of the $N_{GSCN}^{offset}$, and $K_{SSB}$ = 15 corresponds to a value range [-512, -257] of the $N_{GSCN}^{offset}$; and when the number of the synch rasters is greater than 512, portions exceeding cannot be indicated without changing the number of bits occupied by the sub-carrier offset parameter $K_{SSB}$, and in this case, the present application may be applied to overcome the deficiency.

Referring to Fig. 5, Fig. 5 is a flowchart of a cell access method according to an embodiment of the present application. The method is applied to terminal devices. The method includes the following steps:

S210, in a case that an SSB is searched in a band, whether to attempt to initiate cell access is determined according to the searched SSB.

In the embodiments of the present application, the suitable band, for example, may be a band with a minimum frequency value being not less than 52.6 GHz, i.e. the terminal device searches the SSB in a band greater than or equal to 52.6 GHz, for example, searching the SSB in the band of 52.6 GHz-71 GHz. Referring to the above, in the band, the maximum number of the synch rasters may be up to 665, and without increasing the number of bits occupied by the sub-carrier offset parameter $K_{SSB}$, indication cannot be performed on all the synch rasters, such that in the present application, in order to not change the configuration of the sub-carrier offset parameter $K_{SSB}$, the $N_{GSCN}^{offset}$ exceeding the original range may be indicated, so as to adapt the increase in the configuration of the number of the synch rasters in the band. Specifically, one extended parameter A is added, and the indication parameter for indicating the type of the SSB is expressed by the extended parameter A and the $K_{SSB}$, i.e. the indication parameter includes the sub-carrier offset parameter $K_{SSB}$ and the extended parameter A. Since the extended parameter A is added, the indication parameter has a larger value range compared to the sub-carrier offset parameter $K_{SSB}$, such that the indication parameter may indicate a frequency domain position offset $N_{GSCN}^{offset}$ with a larger value range, and thus may adapt the increase in the configuration of the number of the synch rasters to indicate the $N_{GSCN}^{offset}$ with a larger value range.

After having searched the SSB, the terminal device may analyze the SSB. The SSB includes the indication parameter for indicating the type of the SSB. When the indication parameter indicates that the type of the SSB is the NCD-SSB, a value of the $\left|N_{GSCN}^{offset}\right|$ corresponding to the indication parameter falls in [1, 256×M]. The $N_{GSCN}^{offset}$ indicates an offset between a frequency domain position of the synch raster where the CD-SSB is located and a frequency domain position of the synch raster where the NCD-SSB is located, M is an integer not less than 2, and a value of the number of the synch rasters in the band falls in (256×M-1, 256×M.

That is to say, a value range of the $N_{GSCN}^{offset}$ is related to the number of the synch rasters. For example, for some band, when it is determined that the sub-carrier offset parameter $K_{SSB}$ occupies 4 bits and the value of the number of the synch rasters is 665, when the value of the $K_{SSB}$ falls in 0-11, it indicates that the type of the searched SSB is the CD-SSB, and a value of M is 3; and when the value of the $K_{SSB}$ falls in 12-17, it indicates that the type of the searched SSB is the NCD-SSB, and the $N_{GSCN}^{offset}$ with the value range being -768 to 768 may be indicated. A correspondence relationship between the value range of the $N_{GSCN}^{offset}$ and the indication parameter is shown in the following table.

| $K_{SSB}$+A | 16*controlResourceSetZero+searchSpaceZero | $N_{GSCN}^{offset}$ |
|---|---|---|
| 12 | 0, 1,..., 255 | 1, 2,..., 256 |
| 13 | 0, 1,..., 255 | 257, 258,..., 512 |
| 14 | 0, 1,..., 255 | 513, 514,..., 768 |
| 15 | 0, 1,..., 255 | -1, -2,..., -256 |
| 16 | 0, 1,..., 255 | -257, -258,..., -512 |
| 17 | 0, 1,..., 255 | -513, -514,..., -768 |
| 18,..., 31 | 0,1,..., 255 | Reserved, Reserved,..., Reserved |
| ... | ... | ... |

It is understandable that, in a practical application, a value of q may be taken according to the configuration of the number of the synch rasters, such that the $N_{GSCN}^{offset}$ may be flexibly indicated according to requirements.

When a base station broadcasts the SSB, the corresponding indication parameter may be carried by the SSB. Before the base station broadcasts the SSB, a correspondence relationship between the indication parameter in the SSB, controlResourceSetZero and searchSpaceZero and the frequency domain position offset $N_{GSCN}^{offset}$ may be configured, such that when analyzing the indication parameter to indicate that the type of the current SSB is the NCD-SSB, the terminal device may directly acquire the frequency domain position offset $N_{GSCN}^{offset}$ according to the correspondence relationship, so as to find the frequency domain position of the CD-SSB based on the searched NCD-SSB and the corresponding frequency domain position offset $N_{GSCN}^{offset}$, thereby realizing cell access.

In the above implementation process, when the number of bits occupied by the sub-carrier offset parameter $K_{SSB}$ is determined, in order to adapt the increased number of the synch rasters to indicate the frequency domain position offset $N_{GSCN}^{offset}$ with the larger value range, one extended parameter A is added in the present application. The type of the SSB is indicated by the indication parameter including the sub-carrier offset parameter $K_{SSB}$ and the extended parameter A, such that the indication parameter has a larger value range compared to the sub-carrier offset parameter $K_{SSB}$, and the indication parameter may indicate the frequency domain position offset $N_{GSCN}^{offset}$ with the larger value range. When the number of the synch rasters is configured to increase, the configuration of the sub-carrier offset parameter $K_{SSB}$ is not affected, and the frequency domain position offset $N_{GSCN}^{offset}$ exceeding an original range may also be indicated, such that the terminal device may find a suitable CD-SSB through the NCD-SSB, thereby shortening cell accessing delay.

On the basis of the above embodiments, the number of bits occupied by the indication parameter may be customized according to the practical application. The number of bits occupied by the sub-carrier offset parameter $K_{SSB}$ is determined by an SCS corresponding to the SSB and an SCS corresponding to a CORESET#0; and the number of bits occupied by the extended parameter A may be determined by adapting the configuration of the number of the synch rasters. For example, the number of bits occupied by the sub-carrier offset parameter $K_{SSB}$ is 4 bits, and the number of bits occupied by the extended parameter A may be greater than or equal to 1 bit.

In some implementations, the indication parameter may be obtained by combining the sub-carrier offset parameter $K_{SSB}$ and the extended parameter A. if the number of bits of the sub-carrier offset parameter $K_{SSB}$ is 4 bits, and the number of bits of the extended parameter A is 1 bit, the indication parameter may be expressed by combining two parameters, and a combining mode may be that the extended parameter A occupies a highest bit, and the sub-carrier offset parameter $K_{SSB}$ occupies low 4 bits.

For example, the value of the extended parameter A is 0, the value of the sub-carrier offset parameter $K_{SSB}$ is 1100, and then the value of the indication parameter after combining is 01100, i.e. the value of the indication parameter expressed by combining two parameters is 12. Definitely, during combining, the extended parameter A occupies a lowest bit, and the sub-carrier offset parameter $K_{SSB}$ occupies high 4 bits. Through such combining mode, the value range of the indication parameter may also be 0-31.

When the sub-carrier offset parameter $K_{SSB}$ occupies 4 bits, the range of the frequency domain position offset indicated is relatively small, which may not be sufficient to indicate all the synch rasters in the band, such that the frequency domain position offset $N_{GSCN}^{offset}$ with the larger value range is indicated by adding the extended parameter A, and the changing of the sub-carrier offset parameter $K_{SSB}$ is avoided. For example, the indication parameter is 5 bits, it may indicate that the range is 0-31, such that the frequency domain position offset with the larger value range may be indicated.

In this case, a process that the terminal device attempts to initiate cell access is shown as follows.

In a case that the value of the indication parameter falls in a first range, the type of the SSB is determined as the CD-SSB, and then the CD-SSB may be demodulated to attempt to initiate cell access. The value of the indication parameter represents a sub-carrier offset of the SSB, i.e. the sub-carrier offset is indicated by an original sub-carrier offset parameter $K_{SSB}$ and an extended parameter together.

In a case that the value of the indication parameter falls in a second range, the type of the SSB is determined as the NCD-SSB, then a target CD-SSB is determined according to the NCD-SSB, and the target CD-SSB is demodulated to attempt to initiate cell access.

For example, if the value range of the indication parameter is 0-31, when the terminal device analyzes that the value of the indication parameter falls in the first range (e.g. the first range is 0-11), it indicates that the type of the SSB is the CD-SSB, and in this case, the CD-SSB may be directly demodulated to attempt to perform cell access. When the terminal device analyzes that the value of the indication parameter falls in the second range (e.g. the second range is 12-17), it indicates that the type of the SSB is the NCD-SSB, and in this case, one target CD-SSB also needs to be found through the NCD-SSB, so as to perform cell access through the target CD-SSB.

It is understandable that, a specific value range of the first range may be determined according to the SCSes respectively corresponding to the SSB and the CORESET#0 in an actual situation.

When the target CD-SSB is determined, a frequency domain position $GSCN_{CD-SSB}$ may be determined according to a frequency domain position $GSCN_{NCD-SSB}$ of the synch raster where the NCD-SSB is located, and the $N_{GSCN}^{offset}$.

For example, a correspondence relationship between the value of the indication parameter and the frequency domain position offset $N_{GSCN}^{offset}$ is pre-configured, such that the frequency domain position offset may be acquired according to the indication parameter. For example, referring to the above table, if the value of the indication parameter is 12 and a value of 16*controlResourceSetZero+searchSpaceZero (i.e. pdcch-configSIB1) is 0, the terminal device obtains the value of the frequency domain position offset $N_{GSCN}^{offset}$ as 1.

After the frequency domain position offset is obtained, the frequency domain position offset may add the frequency domain position $GSCN_{NCD-SSB}$ of the NCD-SSB, and then the frequency domain position $GSCN_{CD-SSB}$ of the target CD-SSB may be obtained. For example, $N_{GSCN}^{offset} + GSCN_{NCD-SSB} = GSCN_{CD-SSB}$ of target CD-SSB, the $GSCN_{NCD-SSB}$ may be obtained through the synch raster.

In this case, there is a certain correspondence relationship between the value of the indication parameter and the value of the frequency domain position offset. For example, when the value of the indication parameter is $p_1+i$, the value of the corresponding $N_{GSCN}^{offset}$ falls in $[256 \times i+1, 256 \times (i+1)]$, where p1 represents a minimum value of the indication parameter when the type of the SSB is the NCD-SSB, i is an integer, and $0 \leq i \leq M-1$; and when the value of the indication parameter is $p_1+i+M$, the value of the corresponding $N_{GSCN}^{offset}$ falls in $[-256 \times (i+1), -256 \times i+1$.

M is an integer not less than 2, and $p_1$ is the minimum value of the indication parameter when the type of the SSB is the NCD-SSB. When M is equal to 3, the above table may be referred to, and $p_1$ is equal to 12. When i is equal to 0, the value of the indication parameter is 12 and the value range of the corresponding $N_{GSCN}^{offset}$ is [1, 256], and the value of the indication parameter is 15 and the value range of the corresponding $N_{GSCN}^{offset}$ is [-256, -1]; when i is equal to 1, the value of the indication parameter is 13 and the value range of the corresponding $N_{GSCN}^{offset}$ is [257, 512], and the value of the indication parameter is 16 and the value range of the corresponding $N_{GSCN}^{offset}$ is [-512, -257]; and when i is equal to 2, the value of the indication parameter is 14 and the value range of the corresponding $N_{GSCN}^{offset}$ is [513, 768], and the value of the indication parameter is 17 and the value range of the corresponding $N_{GSCN}^{offset}$ is [-768, -513].

The value range of the $N_{GSCN}^{offset}$ increases with the increasing of the indication parameter in a unit of 256, this is because the pdcch-configSIB1 occupies 8 bits.

In the above implementation process, the indication parameter is obtained by combining the $K_{SSB}$ and the extended parameter A, such that the value range of the indication parameter may be limited by the extended parameter A and the sub-carrier offset parameter $K_{SSB}$, so as to indicate the frequency domain position offset $N_{GSCN}^{offset}$ with the larger value range, such that, when the number of the synch rasters is increased, the configuration of the sub-carrier offset parameter $K_{SSB}$ is not affected, and the frequency domain position offset $N_{GSCN}^{offset}$ exceeding the original range may also be indicated, and therefore, the terminal device may find a suitable CD-SSB through the NCD-SSB, thereby realizing rapid access of a cell.

In some other implementations, an indication parameter is obtained by combining the sub-carrier offset parameter $K_{SSB}$ and an extended parameter A, and in this case, the value of the sub-carrier offset parameter $K_{SSB}$ represents a sub-carrier offset of the SSB.

When the terminal device attempts to access the cell, the sub-carrier offset parameter $K_{SSB}$ and the extended parameter A in the SSB are analyzed; when a value of the extended parameter A is null or falls in a third range, and when the value of the sub-carrier offset parameter $K_{SSB}$ or a value after the sub-carrier offset parameter $K_{SSB}$ and the extended parameter A are combined falls in a fourth range, the type of the SSB is determined as the CD-SSB, and the CD-SSB is demodulated to attempt to initiate cell access.

When the value of the extended parameter A falls in a fifth range, and when the value of the sub-carrier offset parameter $K_{SSB}$ or the value after the sub-carrier offset parameter $K_{SSB}$ and the extended parameter A are combined falls in a sixth range, the type of the SSB is determined as the NCD-SSB, the target CD-SSB is determined according to the NCD-SSB, and then the target CD-SSB is demodulated to attempt to initiate cell access.

For example, the mode of combining the sub-carrier offset parameter $K_{SSB}$ and the extended parameter A still is that the extended parameter A occupies a high-order bit, and the sub-carrier offset parameter $K_{SSB}$ occupies a low-order bit; and the extended parameter A occupies 1 bit, and the sub-carrier offset parameter $K_{SSB}$ occupies 4 bits.

In this example, if the value of the extended parameter A is null or falls in the third range (e.g. the third range is 0), in this case, if the value of the sub-carrier offset parameter $K_{SSB}$ falls in the fourth range (e.g. the fourth range is 0-11) or the value after the sub-carrier offset parameter $K_{SSB}$ and the extended parameter A are combined falls in the fourth range (e.g. the fourth range is 0-11), the type of the SSB may be determined as the CD-SSB, and cell access may be directly performed according to the CD-SSB. When the value of the extended parameter A falls in the fifth range (e.g. the fifth range is 1), in this case, if the value of the sub-carrier offset parameter $K_{SSB}$ falls in the sixth range (e.g. the sixth range is 12-13) or the value after the sub-carrier offset parameter $K_{SSB}$ and the extended parameter A are combined falls in the sixth range (e.g. the sixth range is 28-29), the type of the SSB is determined as the NCD-SSB, in this case, the target CD-SSB may be acquired according to the NCD-SSB, and then cell access is performed according to the target CD-SSB.

It is understandable that, a specific value range of the fourth range may be determined according to the SCSes respectively corresponding to the SSB and the CORESET#0 in an actual situation.

In the above implementation process, the indication parameter is obtained by combining the sub-carrier offset parameter $K_{SSB}$ and the extended parameter A, such that the type of the SSB may be preliminarily determined directly according to the value range of the extended parameter A.

On the basis of the above embodiments, when the target CD-SSB is determined, the frequency domain position $GSCN_{CD-SSB}$ may be determined according to the frequency domain position $GSCN_{NCD-SSB}$ of the synch raster where the NCD-SSB is located, and the $N_{GSCN}^{offset}$.

For example, a correspondence relationship between the value of the sub-carrier offset parameter $K_{SSB}$ and the frequency domain position offset $N_{GSCN}^{offset}$ is pre-configured, such that the frequency domain position offset may be acquired according to the indication parameter and the value of the corresponding pdcch-ConfigSIB1. After the frequency domain position offset is obtained, the frequency domain position offset may add the frequency domain position $GSCN_{NCD-SSB}$ of the NCD-SSB, and then the frequency domain position $GSCN_{CD-SSB}$ of the target CD-SSB may be obtained. For example, $N_{GSCN}^{offset}$ +$GSCN_{NCD-SSB}$ = $GSCN_{CD-SSB}$ of target CD-SSB, where the $GSCN_{NCD-SSB}$ may be obtained through the synch raster.

In this case, there is a certain correspondence relationship between the value of the indication parameter and the value of the frequency domain position offset. For example, when the value of the indication parameter is $p_2$+i, the

value of the corresponding $N_{GSCN}^{offset}$ falls in [256×i+1, 256×(i+1)], the $p_2$ represents a minimum value of the sub-carrier offset parameter $K_{SSB}$ or a minimum value after the sub-carrier offset parameter $K_{SSB}$ and the extended parameter A are combined when the type of the SSB is the NCD-SSB, i is an integer, and 0≤i≤M-1. When the value of the indication parameter is $p_2+i+M$, the value of the corresponding $N_{GSCN}^{offset}$ falls in [-256×(i+1), -(256×i+ 1)].

M is an integer not less than 2, and $p_2$ is the minimum value of the indication parameter when the type of the SSB is the NCD-SSB. When M is equal to 3, the above table may be referred to, and $p_2$ is equal to 12. When i is equal to 0, the value of the indication parameter is 12 and the value range of the corresponding $N_{GSCN}^{offset}$ is [1, 256], and the value of the indication parameter is 15 and the value range of the corresponding $N_{GSCN}^{offset}$ is [-256, -1]; when i is equal to 1, the value of the indication parameter is 13 and the value range of the corresponding $N_{GSCN}^{offset}$ is [257, 512], and the value of the indication parameter is 16 and the value range of the corresponding $N_{GSCN}^{offset}$ is [-512, -257]; and when i is equal to 2, the value of the indication parameter is 14 and the value range of the corresponding $N_{GSCN}^{offset}$ is [513, 768], and the value of the indication parameter is 17 and the value range of the corresponding $N_{GSCN}^{offset}$ is [-768, -513]. The value range of the $N_{GSCN}^{offset}$

increases with the increasing of the indication parameter in a unit of 256, this is because the pdcch-configSIB1 occupies 8 bits.

In the above implementation process, the type of the SSB is indicated by the value of the indication parameter. Since the indication parameter has a larger value range compared to the sub-carrier offset parameter $K_{SSB}$, the indication parameter may indicate the frequency domain position offset $\left|N_{GSCN}^{offset}\right|$ with the larger value range, such that, when the type of the SSB is the NCD-SSB, the terminal device may find a suitable CD-SSB through the $\left|N_{GSCN}^{offset}\right|$ corresponding to the NCD-SSB.

On the basis of the above embodiments, the extended parameter A may be indicated by at least one parameter of subCarrierSpacingCommon, dmrs-TypeA-Position, cellBarred, intraFreqReselection, or Spare in the MIB.

For example, when the extended parameter A occupies 1 bit, one or the above parameters may be used for indication; and when the extended parameter occupies 2 bits, a combination of any two of the above parameters may be used for indication.

By the related parameters in the MIB to indicate the extended parameter A, parameters may not be additionally added to indicate the extended parameter, such that the operation is simpler.

The parameter subCarrierSpacingCommon in the MIB is used for indicating an initially-accessed SCS, and occupies 1 bit. If the parameter subCarrierSpacingCommon is used to indicate the extended parameter A, after analyzing the value of the parameter, the terminal device may determine the value of the extended parameter A, and then the value of the indication parameter is determined in combination with the value of the sub-carrier offset parameter $K_{SSB}$. In this case, the terminal device defaults SCSes of the SIB1, OSI, and messages msg2 and msg4 to be same as the SSB, such that the terminal device may acquire the SCS from other information, and after analyzing the parameter, may obtain the value of the extended parameter A.

The parameter dmrs-TypeA-Position in the MIB is used for indicating a symbol position of a first PDSCH DMRS in a time slot, and occupies 1 bit. If the parameter dmrs-TypeA-Position is used to indicate the extended parameter A, after analyzing the value of the parameter, the terminal device may determine the value of the extended parameter A, and then the value of the indication parameter is determined in combination with the value of the sub-carrier offset parameter $K_{SSB}$. In this case, the base station may fix a DMRS in a PBCH in the SSB, i.e. fixed at a second symbol position pos2 or a third symbol position pos3. That is to say, the terminal device defaults that the position of the DMRS of the PBCH is the second symbol position pos2 or the third symbol position pos3.

The parameter cellBarred in the MIB is used for indicating whether the terminal device is allowed to reside in the cell, and occupies 1 bit. If the parameter cellBarred is used to indicate the extended parameter A, after analyzing the value of the parameter, the terminal device may determine the value of the extended parameter A, and then the value of the indication parameter is determined in combination with the value of the sub-carrier offset parameter $K_{SSB}$. The terminal device defaults prohibition access to the cell when determining that the type of the SSB is the NCD-SSB, and defaults allowable access to the cell when determining that the type of the SSB is the CD-SSB.

The parameter intraFreqReselection in the MIB is used for controlling cell reselection of same-frequency cells, and occupies 1 bit. If the parameter intraFreqReselection is used to indicate the extended parameter A, after analyzing the value of the parameter, the terminal device may determine the value of the extended parameter A, and then the value of the indication parameter is determined in combination with the value of the sub-carrier offset parameter $K_{SSB}$. The terminal device defaults prohibition of same-frequency reselection when determining that the type of the SSB is the NCD-SSB, and defaults the allowing of same-frequency reselection when determining that the type of the SSB is the CD-SSB.

The parameter Spare in the MIB is a backup parameter, and occupies 1 bit. If the parameter Spare is used to indicate the extended parameter A, after analyzing the value of the parameter, the terminal device may determine the value of the extended parameter A, and then the value of the indication parameter is determined in combination with the value of the sub-carrier offset parameter $K_{SSB}$.

The content in this embodiment corresponds to the same as a method of a network side, such that the same parts will not be described herein again.

**Embodiment 8:**

This embodiment of the present application involves some concepts below.

Each Global Synchronization Channel Number (GSCN) corresponds to one frequency domain position in the Synch raster. Referring to Table 9, Table 9 shows a correspondence relationship between each GSCN and the frequency domain position. It may be seen that, according to a third column in Table 9, the GSCNs corresponding to different frequency domain positions may be calculated.

Table 9 Correspondence relationship between each GSCN and frequency domain position

| Frequency range | Frequency range of SSB | GSCN | Range of GSCN |
|---|---|---|---|
| 0-3000MHZ | N*1200kHz+M*50kHz, N=1:2499, M $\in$ {1,3,5}(Note) | 3N+(M-3)2 | 2-7498 |
| 3000-24250MHZ | 3000MHZ+N*1.44MHz N=0:147656 | 7499+N | 7499-22255 |
| 24250-100000MHz | 24250.08MHz+N*17.28MHz N=0:4383 | 22256+N | 22256-26639 |

The SSB may be divided into the CD-SSB and the NCD-SSB. The CD-SSB is mainly configured to achieve initial access of a cell, including information of the System Information Block 1 (SIB1) for cell access; and the NCD-SSB is mainly configured to achieve other situations in addition to initial access of the cell, for example, measurement, etc. When deploying the SSBs, operators generally deploy the NCD-SSBs and the CD-SSBs on the Synch raster together. Therefore, when the terminal device searches the SSB on the Synch raster, there exists a certain probability that the searched SSB is the NCD-SSB. Since the NCD-SSB does not include SIB1 information for accessing a target cell, the terminal device needs to find a target CD-SSB through the NCD-SSB.

The SSB includes the Master Information Block (MIB) and a Physical Broadcast Channel (PBCH) payload.

The MIB achieves transmission through a PBCH, and includes parameters such as system frame numbers, sub-carrier common spacings (sub Carrier Spacing Commo), sub-carrier offset parameters (ssb-Subcarrier Offset), dmrs-TypeA positions (dmrs-TypeA-Position), configuration parameters of the SIB1 of a PDCCH (pdcch-Config SIB1), etc.

The ssb-Subcarrier Offset indicates a Resource Element-level (RE-level) offset between the SSB and the CORESET#0, and may be indicated by the parameter $K_{SSB}$. According to different configurations, when the parameter $K_{SSB}$ demodulated by the terminal device is greater than or equal to a first numerical value and less than a second numerical value, it may indicate that the SSB is the NCD-SSB, i.e. cannot be used for initial cell access. In this case, the terminal device may determine an offset $N_{GSCN}^{offset}$ of the GSCN between the SSB (NCD-SSB) and a target SSB (CD-SSB) according to two parameters of a Control Resource Set Zero and a Search Space Zero in the pdcch-config SIB1 in the MIB.

Using Table 6 as an example, Table 6 shows a GSCN offset relationship. When the parameter $K_{SSB}$ demodulated by the terminal device is a number greater than or equal to 12 and less than 14, it may indicate that the SSB is the NCD-SSB. For example, when the parameter $K_{SSB}$ is configured to 12, the control Resource Set Zero is configured to 0000 and the search Space Zero is configured to 0001 (in this case, 16×controlResourceSetZero+searchSpaceZero is configured to 1), it may be determined that the offset $N_{GSCN}^{offset}$ of the GSCN between the target SSB (CD-SSB) and the SSB (NCD-SSB) is equal to 2.

Table 6 GSCN offset relationship

| $K_{SSB}$ | 16xcontrolResourceSetZero+searchSpaceZero | $N_{GSCN}^{offset}$ |
|---|---|---|
| 12 | 0,1,..., 255 | 1,2,..., 256 |
| 13 | 0,1,..., 255 | -1, -2,..., -256 |
| 14 | 0,1,..., 255 | Reserved, Reserved,..., Reserved |

The PBCH payload is mainly formed at a physical layer, occupies 8 bits, and is configured to indicate system frame numbers, half-frame indicators, candidate SSB indexes, etc.

A cell generally refers to a range that may be covered by a signal of a network device.

The technical solutions in the embodiments of the present application are described below with reference to the drawings in the embodiments of the present application.

The technical solutions of the embodiments of the present application are applicable to various communication systems, for example, a Global System of Mobile communication (GSM), a Code Division Multiple Access (CDMA) system, a Wideband Code Division Multiple Access (WCDMA) system, a General Packet Radio Service (GPRS), a Long Term Evolution (LTE) system, an LTE Frequency Division Duplex (FDD) system, LTE Time Division Duplex (TDD), a Universal Mobile Telecommunication System (UMTS), a Worldwide Interoperability for Microwave Access (WiMAX) communication system, or a 5G system.

Referring to Fig. 8, Fig. 8 is a block structural diagram of a communication system according to an embodiment of the present application. The communication system 100 may include a network device 101 and a terminal device 102. The network device 101 is communicatively connected to the terminal device 102.

Specifically, the network device 101 may provide communication coverage for a specific geographical region, and may communicate with the terminal device located in the coverage region. It is understandable that, in different communication systems, the network device 101 provided in the embodiments of the present application may have different forms.

As an implementation, the network device 101 may be a Base Transceiver Station (BTS) in a GSM system or a CDMA system, or may be a NodeB (NB) in the WCDMA system, and may further be an Evolutional Node B (eNB or eNodeB) in the LTE system or a wireless controller in a Cloud Radio Access Network (CRAN). Alternatively, as another implementation, the network device 101 may be a mobile switching center, a relay station, an access point, a vehicle device, a wearable device, a hub, a switch, a network bridge, a router, a network-side device in a 5G network, or the like.

The terminal device 102 may be a device in a coverage range of the network device 101. Similar to the network device 101, it is understandable that, in different application scenarios, the terminal device 102 provided in the embodiments of the present application may have different forms. For example, the terminal device 102 may be a handheld device having a wireless communication function, a vehicle device, a wearable device, a terminal device in the 5G network, or the like.

In this embodiment of the present application, a communication mode between the network device 101 and the terminal device 102 is not specifically limited. As an implementation, the network device 101 and the terminal device 102 may communicate with each other in a wired manner. For example, the network device 101 and the terminal device 102 may be connected with each other by a Digital Subscriber Line (DSL), a digital cable, a connection cable, etc. As another implementation, the network device 101 and the terminal device 102 may communicate with each other in a wireless manner, for example, connected through a cellular network, a Wireless Local Area Network (WLAN), an Internet of Things (IoT), etc.

In this embodiment of the present application, the number of the network devices 101 and the number of the terminal devices 102 in the communication system 100 are not specifically limited. As an implementation, there may be one or more network devices 101. As another implementation, there may be one or more terminal devices 102.

When there is one network device 101, the communication system 100 may include one or more terminal devices 102 within a coverage range of the network device 102. When there are a plurality of network devices 101, there may also be one or more terminal devices 102 within the coverage range of each network device 101, and the terminal devices 102 may overlap within the coverage ranges of the plurality of network devices 101, i.e. a certain terminal device 102 may be located in the coverage ranges of the plurality of network devices 102 at the same time.

Further, the communication system 100 provided in this embodiment of the present application may further include other network entities such as a network controller and a mobile management entity, and this embodiment of the present application is not specifically limited thereto.

Based on the communication system 100, this embodiment of the present application provides a cell access method applied to the terminal device 102 and a cell broadcasting method applied to the network device 101. The two methods are successively introduced in detail below.

First, the cell access method applied to the terminal device 102 provided in this embodiment of the present application is introduced. Referring to Fig. 9, Fig. 9 is a flowchart of a cell access method according to an embodiment of the present application. The cell access method may include the following content:

S201, in a case that an SSB is searched in a band, whether to attempt to initiate cell access is determined according to the searched SSB.

Specifically, the terminal device needs to access a cell after being powered up, such that the terminal device may successively search each frequency domain position in the band according to a certain sequence, so as to receive the SSB corresponding to the frequency domain position. When the terminal device has searched the SSB in the band, whether to attempt to access the cell is determined according to the SSB.

After having searched the SSB, the terminal device may analyze the SSB. During analysis, attention may be paid to a parameter $K_{SSB}$, and whether the SSB is the CD-SSB or the NCD-SSB may be determined through the parameter.

It is understandable that, when it is determined that the SSB is the CD-SSB, the terminal device may directly attempt to access the cell; and when it is determined that the SSB is the CD-SSB, the terminal device may find a suitable CD-SSB based on the NCD-SSB and the parameter $K_{SSB}$, and attempt to access the cell.

It is to be noted that, in this embodiment of the present application, a minimum frequency value of the band is not less than 52.6 GHz, and the SSB and a corresponding type0-PDCCH have different SCSes. The value of the parameter $K_{SSB}$ may be configured according to the difference between an SCS of the SSB and an SCS of a corresponding type0-PDCCH. In other words, the SCS of the SSB is different from the SCS of the type0-PDCCH, leading to different parameters $K_{SSB}$.

For example, when the SCS of the SSB is 480 kHz and the SCS of the type0-PDCCH is 120 kHz, the parameter $K_{SSB}$ may be configured as: when the value of the $K_{SSB}$ is [0, 2], the SSB is the CD-SSB; and when value of the $K_{SSB}$ is [3, 8], the SSB is the NCD-SSB.

It is understandable that, in some embodiments, the SCS of the SSB is equal to the SCS of the type0-PDCCH. However, in this embodiment of the present application, the SCS of the SSB is not equal to the SCS of the PDCCH where the CORESET#0 is located.

In the above solution, when the searched SSB is the CD-SSB, cell access may directly be attempted; and when the searched SSB is the NCD-SSB, a suitable CD-SSB may be found based on the parameter $K_{SSB}$ that is determined according to the difference between the SCS of the SSB and the SCS of the PDCCH where the CORESET#0 is located, and cell access is attempted. Therefore, in a band higher than 52.6 GHz, when the SCS of the SSB is different from an SCS of a PDCCH where a CORESET#0 is located, the terminal device may find a suitable CD-SSB to reduce cell accessing delay.

Further, the step of according to the searched SSB, whether to attempt to initiate cell access is determined may specifically include the following content:

in a case that the value of the parameter $K_{SSB}$ falls in [0, $p_0$], the SSB is determined as the CD-SSB, and the CD-SSB is demodulated to attempt to initiate cell access;

in a case that the value of the parameter $K_{SSB}$ falls in [$p_0$+1, $p_0$+2M], the SSB is determined as the NCD-SSB, a target CD-SSB is determined according to the NCD-SSB, and the target CD-SSB is demodulated to attempt to initiate cell access.

Specifically, it may be learned from the above embodiments that, the value of the parameter $K_{SSB}$ may be configured according to the difference between an SCS of the SSB and an SCS of a corresponding type0-PDCCH. As an implementation, the parameter $K_{SSB}$ may be configured as: in the case that the value of the $K_{SSB}$ is [0, $p_0$], the SSB is the CD-SSB, and the terminal device may directly attempt to access a cell; and in the case that the value of the $K_{SSB}$ is [$p_0$+1, $p_0$+2M, the SSB is the NCD-SSB, and the terminal device may find a suitable CD-SSB based on the NCD-SSB and the parameter $K_{SSB}$, and attempt to access the cell.

It is to be noted that, $p_0$ and M both are positive integers, and a value of $p_0$ may also be determined according to the difference between the SCS of the SSB and the SCS of the corresponding type0-PDCCH; and at the same time, the value of the number of the synch rasters in the band falls in (256×M-1, 256×M.

In the above solution, in the case that the value of the parameter $K_{SSB}$ falls in [0, $p_0$], the cell may be directly attempted to be accessed based on the searched SSB; and in the case that the value of the parameter $K_{SSB}$ falls in

$[p_0+1, p_0+2M]$, the suitable CD-SSB may be found based on the parameter $K_{SSB}$, and cell access is attempted. Therefore, in a band higher than 52.6 GHz, when the SCS of the SSB is different from an SCS of a PDCCH where a CORESET#0 is located, the terminal device may find a suitable CD-SSB to reduce cell accessing delay.

Further, the step of the target CD-SSB is determined according to the NCD-SSB may specifically include the following content:

a frequency domain position $GSCN_{CD-SSB}$ of the target CD-SSB is determined according to a frequency domain position $GSCN_{NCD-SSB}$ of the synch raster where the NCD-SSB is located and a frequency domain position offset $N_{GSCN}^{offset}$ between the synch raster where the target CD-SSB is located and the synch raster where the NCD-SSB is located.

Specifically, when the value of the parameter $K_{SSB}$ falls in $[p_0+1, p_0+2M]$, the suitable CD-SSB may be found based on the parameter $K_{SSB}$, and cell access is attempted. The terminal device may find the frequency domain position $GSCN_{NCD-SSB}$ of the synch raster where the NCD-SSB is located according to two parameters of the parameter $K_{SSB}$ in the searched NCD-SSB and the frequency domain position $GSCN_{NCD-SSB}$ of the synch raster where the NCD-SSB is located, and then the frequency domain position $GSCN_{CD-SSB}$ of the target CD-SSB is determined according to the $GSCN_{NCD-SSB}$ and the frequency domain position offset $N_{GSCN}^{offset}$ between the synch raster where the target CD-SSB is located and the synch raster where the NCD-SSB is located.

As an implementation, the frequency domain position $GSCN_{NCD-SSB}$ of the synch raster where the NCD-SSB is located and the frequency domain position offset $N_{GSCN}^{offset}$ between the synch raster where the target CD-SSB is located and the synch raster where the NCD-SSB is located are added to obtain the frequency domain position GSCN$_{CD-SSB}$ of the target CD-SSB. That is:

$$GSCN_{CD-SSB} = GSCN_{NCD-SSB} + N_{GSCN}^{offset}$$

It is to be noted that, when parameter $K_{SSB} = p_0+1+i$, the value of the corresponding $N_{GSCN}^{offset}$ falls in [256×i+1, 256×i+1; and when parameter $K_{SSB} = p_0+1+i+M$, the value of the $N_{GSCN}^{offset}$ falls in -256×i+1, -256×i+1, i is an integer, and 0≤i≤M-1.

In the above solution, when the value of the parameter KSSB falls in $[p_0+1, p_0+2M]$, a frequency domain position $GSCN_{CD-SSB}$ corresponding to a suitable CD-SSB may be found based on the frequency domain position $GSCN_{NCD-SSB}$ of the NCD-SSB and the corresponding frequency domain position offset $N_{GSCN}^{offset}$, and cell access is attempted. Therefore, in a band higher than 52.6 GHz, when the SCS of the SSB is different from an SCS of a PDCCH where a CORESET#0 is located, the terminal device may find a suitable CD-SSB to reduce cell accessing delay.

It is understandable that, when the searched CD-SSB is determined or the corresponding CD-SSB is found according to the searched NCD-SSB, due to reasons such as signal strength, the terminal device does not necessarily access a corresponding cell based on the CD-SSB. That is to say, the terminal device may first attempt to access the cell, and then, if access fails, continue to search other frequency domain positions.

Further, as an implementation, the value of p may be a maximum integer value less than 12/j, and j indicates a ratio of the SCS of the SSB to the SCS of the corresponding type0-PDCCH.

The cell access method provided in the above embodiments is introduced below with examples.

Example I, the SCS of the searched SSB is 480 kHz and the SCS of the corresponding type0-PDCCH is 120 kHz, referring to Fig. 10, Fig. 10 is a schematic diagram of an RE level offset of an SSB and a type0-PDCCH according to an embodiment of the present application.

From Fig. 10, it may be seen that, the SCS of the SSB is 4 times of the SCS of the type0-PDCCH. Since the RE level offset here moves in a unit of the SCS of the SSB, in this case, the RE level offset between the SSB and the type0-PDCCH may take 0, 1, or 2, and $p_0 = 2$.

In this case, only 2 bits in the parameter $K_{SSB}$ need to be used for indication, for example, two lowest bits (LSB of Subcarrier Offset). Therefore, the parameter $K_{SSB}$ may be configured as: when the value of the $K_{SSB}$ is [0, 2], the SSB is the CD-SSB; and when value of the $K_{SSB}$ is [3, 8], the SSB is the NCD-SSB. That is, $p_0 = 2$, and M = 3. Based on this, when the parameter $K_{SSB}$ occupies the constant number of bits (for example, occupying 4 bits), the value of the parameter $K_{SSB}$ may be flexibly configured according to a combination of the SCSes corresponding to the SSB and the type0-PDCCH and the number of the synch rasters, so as to indicate the type of the SSB and a correspondence relationship between the NCD-SSB and the $N_{GSCN}^{offset}$.

When the minimum frequency value of the band is not less than 52.6 GHz, the number of the Synch rasters in the band is greater than 256. For example, for the band of 52.6 GHz-71 GHz, since the number of the Synch rasters in the band within the band range is greater than 256 and cannot exceed 665, when M = 3, on the basis of the above embodiments, a value range of a GSCN offset is increased from -768 to 768.

Referring to Table 7, Table 7 shows a GSCN offset relationship. When the value of the $K_{SSB}$ is [3, 8], the SSB is the NCD-SSB. When $K_{SSB}$ = 3 (i.e. i = 0), the value of the corresponding $N_{GSCN}^{offset}$ falls in [1, 256]; when $K_{SSB}$ = 4 (i.e. i = 1), the value of the corresponding $N_{GSCN}^{offset}$ falls in [257, 512]; when $K_{SSB}$ = 5 (i.e. i = 2), the value of the corresponding $N_{GSCN}^{offset}$ falls in [513, 768]; when $K_{SSB}$ = 6 (i.e. i = 0), the value of the corresponding $N_{GSCN}^{offset}$ falls in [-256, -1]; when $K_{SSB}$ = 7 (i.e. i = 1), the value of the corresponding $N_{GSCN}^{offset}$ falls in [-512, -257]; and when $K_{SSB}$ = 8 (i.e. i = 2), the value of the corresponding $N_{GSCN}^{offset}$ falls in [-768, -513].

Table 7 GSCN offset relationship

| $K_{SSB}$ | 16×controlResourceSetZero+searchSpaceZero | $N_{GSCN}^{offset}$ |
|---|---|---|
| 3 | 0,1,..., 255 | 1,2,..., 256 |
| 4 | 0,1,..., 255 | 257,258,..., 512 |
| 5 | 0,1,..., 255 | 513,514,..., 768 |
| 6 | 0,1,..., 255 | -1, -2,..., -256 |
| 7 | 0,1,..., 255 | -257, -258,..., -512 |
| 8 | 0,1,..., 255 | -513, -514,..., -768 |
| 9,..., 15 | 0,1,..., 255 | Reserved, Reserved,..., Reserved |

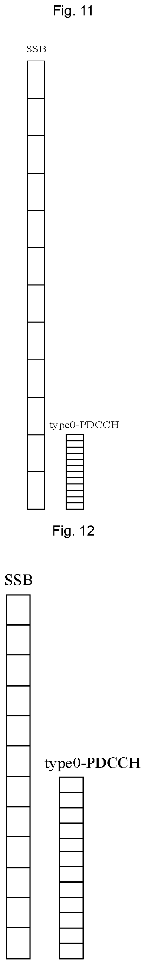

Example II, the SCS of the searched SSB is 960kHz and the SCS of the corresponding type0-PDCCH is 120 kHz, referring to Fig. 11, Fig. 11 is a schematic diagram of an RE level offset of an SSB and a type0-PDCCH according to an embodiment of the present application.

From Fig. 11, it may be seen that, the SCS of the SSB is 8 times of the SCS of the type0-PDCCH. Likewise, since the RE level offset here moves in a unit of the SCS of the SSB, in this case, the RE level offset between the SSB and the type0-PDCCH may take 0 or 1, and $p_0$ = 1.

In this case, only 1 bit in the parameter $K_{SSB}$ need to be used for indication, and the parameter $K_{SSB}$ may be configured as: when the value of the $K_{SSB}$ is [0, 1], the SSB is the CD-SSB; and when value of the $K_{SSB}$ is [2, 7], the SSB is the NCD-SSB. That is, $p_0$ = 1, and M = 3. Based on this, when the parameter $K_{SSB}$ occupies the constant number of bits (for example, occupying 4 bits), the value of the parameter $K_{SSB}$ may be flexibly configured according to a combination of the SCSes corresponding to the SSB and the type0-PDCCH and the number of the synch rasters, so as to indicate the type of the SSB and a correspondence relationship between the NCD-SSB and the $N_{GSCN}^{offset}$.

Likewise, when the minimum frequency value of the band is not less than 52.6 GHz, the number of the Synch rasters in the band is greater than 256. For example, for the band of 52.6 GHz-71 GHz, since the number of the Synch rasters in the band within the band range is greater than 256 and cannot exceed 665, when M = 3, on the basis of the above embodiments, a value range of a GSCN offset is increased from -768 to 768.

Referring to Table 8, Table 8 shows a GSCN offset relationship. When the value of the $K_{SSB}$ is [2, 7], the SSB is the NCD-SSB. When $K_{SSB} = 2$ (i.e. i = 0), the value of the corresponding $N_{GSCN}^{offset}$ falls in [1, 256]; when $K_{SSB} = 3$ (i.e. i = 1), the value of the corresponding $N_{GSCN}^{offset}$ falls in [257, 512]; when $K_{SSB} = 4$ (i.e. i = 2), the value of the corresponding $N_{GSCN}^{offset}$ falls in [513, 768]; when $K_{SSB} = 5$ (i.e. i = 0), the value of the corresponding $N_{GSCN}^{offset}$ falls in [-256, -1]; when $K_{SSB} = 6$ (i.e. i = 1), the value of the corresponding $N_{GSCN}^{offset}$ falls in [-512, -257]; and when $K_{SSB} = 7$ (i.e. i = 2), the value of the corresponding $N_{GSCN}^{offset}$ falls in [-768, -513].

Table 8 GSCN offset relationship

| $K_{SSB}$ | 16×controlResourceSetZero+searchSpaceZero | $N_{GSCN}^{offset}$ |
|---|---|---|
| 2 | 0,1,..., 255 | 1,2,..., 256 |
| 3 | 0,1,..., 255 | 257,258,..., 512 |
| 4 | 0,1,..., 255 | 513,514,..., 768 |
| 5 | 0,1,..., 255 | -1, -2,..., -256 |
| 6 | 0,1,..., 255 | -257, -258,..., -512 |
| 7 | 0,1,..., 255 | -513, -514,..., -768 |
| 8,..., 15 | 0,1,..., 255 | Reserved, Reserved,..., Reserved |

Example III, the SCS of the searched SSB is 960 kHz and the SCS of the corresponding type0-PDCCH is 480 kHz, referring to Fig. 12, Fig. 12 is a schematic diagram of an RE level offset of an SSB and a type0-PDCCH according to an embodiment of the present application.

From Fig. 12, it may be seen that, the SCS of the SSB is 2 times of the SCS of the type0-PDCCH. Likewise, since the RE level offset here moves in a unit of the SCS of the SSB, in this case, the RE level offset between the SSB and the type0-PDCCH may take 0, 1, 2, 3, 4, or 5, and M = 5.

In this case, 3 bits in the parameter $K_{SSB}$ need to be used for indication, such that the parameter $K_{SSB}$ may be configured as: when the value of the $K_{SSB}$ is [0, 5], the SSB is the CD-SSB; and when value of the $K_{SSB}$ is [6, 1], the SSB is the NCD-SSB. That is, $p_0 = 5$, and M = 3. Based on this, when the parameter $K_{SSB}$ occupies the constant number of bits (for example, occupying 4 bits), the value of the parameter $K_{SSB}$ may be flexibly configured according to a combination of the SCSes corresponding to the SSB and the type0-PDCCH and the number of the synch rasters, so as to indicate the type of the SSB and a correspondence relationship between the NCD-SSB and the $N_{GSCN}^{offset}$.

Likewise, when the minimum frequency value of the band is not less than 52.6 GHz, the number of the Synch rasters in the band is greater than 256. For example, for the band of 52.6 GHz-71 GHz, since the number of the Synch rasters in the band within the band range is greater than 256 and cannot exceed 665, when M = 3, on the basis of the above embodiments, a value range of a GSCN offset is increased from -768 to 768.

Referring to Table 10, Table 10 shows a GSCN offset relationship. When the value of the $K_{SSB}$ is [6, 11], the SSB is the NCD-SSB. When $K_{SSB} = 6$ (i.e. i = 0), the value of the corresponding $N_{GSCN}^{offset}$ falls in [1, 256]; when $K_{SSB} = 7$ (i.e. i = 1), the value of the corresponding $N_{GSCN}^{offset}$ falls in [257, 512]; when $K_{SSB} = 8$ (i.e. i = 2), the value of the corresponding $N_{GSCN}^{offset}$ falls in [513, 768]; when $K_{SSB} = 9$ (i.e. i = 0), the value of the corresponding $N_{GSCN}^{offset}$ falls in [-256, -1]; when $K_{SSB} = 10$ (i.e. i = 1), the value of the corresponding $N_{GSCN}^{offset}$ falls in [-512, -257]; and when $K_{SSB} = 11$ (i.e. i = 2), the value of the corresponding $N_{GSCN}^{offset}$ falls in [-768, -513].

Table 10 GSCN offset relationship

| $k_{SSB}$ | 16×controlResourceSetZero+searchSpaceZero | $N_{GSCN}^{offset}$ |
|---|---|---|
| 6 | 0,1,..., 255 | 1,2,..., 256 |
| 7 | 0,1,..., 255 | 257,258,..., 512 |
| 8 | 0,1,..., 255 | 513,514,..., 768 |
| 9 | 0,1,..., 255 | -1, -2,..., -256 |
| 10 | 0,1,..., 255 | -257, -258,..., -512 |
| 11 | 0,1,..., 255 | -513, -514,..., -768 |
| 12,..., 15 | 0,1,..., 255 | Reserved, Reserved,..., Reserved |

It is understandable that, specific numerical values of the SCS of the SSB and the SCS of the type0-PDCCH are all examples provided in the embodiments of the present application, and the embodiments of the present application are not specifically limited thereto. A person skilled in the art may be aware of methods for performing other numerical values on the basis of the embodiments provided in the present solution.

As an implementation, the specific numerical values of the SCS of the SSB and the SCS of the type0-PDCCH may be other numerical values other than 120 kHz, 480 kHz, and 960 kHz, and the embodiments of the present application are not specifically limited thereto.

The content in this embodiment corresponds to the same as a method of a network side, such that the same parts will not be described herein again.

**Embodiment 9:**

The extended parameter A may be indicated by at least one parameter of subCarrierSpacingCommon, dmrs-TypeA-Position, cellBarred, intraFreqReselection, or Spare in the Master Information Block (MIB).

When the extended parameter A is indicated by the parameter subCarrierSpacingCommon, SCSes of the SIB1, OSI, and messages msg2 and msg4 are the same as the SSB.

When the extended parameter A is indicated by the parameter dmrs-TypeA-Position, the position of the DMRS in the configured PBCH is pos2 or pos3.

When the extended parameter A is indicated by the parameter cellBarred, a cell is allowed to access when the type of the SSB is configured to be the CD-SSB, and the cell is prohibited from accessing when the type of the SSB is the NCD-SSB.

When the extended parameter A is indicated by the parameter intraFreqReselection, same-frequency reselection is allowed when the type of the SSB is configured to be the CD-SSB, and same-frequency reselection is prohibited when the type of the SSB is the NCD-SSB.

The number of bits occupied by the sub-carrier offset parameter $K_{SSB}$ is 4 bits, and the number of bits occupied by the extended parameter A is not less than 1 bit.

And/or, the minimum frequency value of the band is not less than 52.6 GHz.

It is understandable that, in this embodiment, the description of the extended parameter A and the specific process of parameter analysis and cell access by the terminal device may be referred to the description of the above embodiment. For ease and concise of description, details are not described herein again.

In the above implementation process, the type of the SSB is indicated by the indication parameter including the sub-carrier offset parameter $K_{SSB}$ and the extended parameter A. Since the extended parameter A is added, the indication parameter has a larger value range compared to the sub-carrier offset parameter $K_{SSB}$, and the value range of the frequency domain position offset $N_{GSCN}^{offset}$ corresponding to the indication parameter may also be increased. In this way, when the number of the synch rasters is configured to increase, the configuration of the sub-carrier offset parameter $K_{SSB}$ is not affected, and the frequency domain position offset $N_{GSCN}^{offset}$ may also be indicated, such that the terminal device may find a suitable CD-SSB through the NCD-SSB, thereby shortening cell accessing delay.

Although specific embodiments of the present disclosure are described above, it should be understood by those skilled in the art that this is by way of example only and that the scope of protection of the present disclosure is limited by the appended claims. Those skilled in the art may make a variety of changes or modifications to these embodiments without departing from the principles and substance of the present disclosure, but these changes and modifications fall within the scope of protection of the present disclosure.

**Claims**

1. A method for determining a frequency domain position of a Synchronization Signal Block (SSB), comprising:

   in a case that a None Cell Define SSB (NCD-SSB) is searched in a band, determining a frequency domain position offset $N_{GSCN}^{offset}$, wherein the $N_{GSCN}^{offset}$ indicates an offset between a frequency domain position of a synchronization raster where a Cell Define SSB (CD-SSB) is located and a frequency domain position of a synchronization raster where the NCD-SSB is located, a value of $\left|N_{GSCN}^{offset}\right|$ falls in [1, 256×M], M is an integer not less than 2, a value of the number of synchronization rasters in the band falls in (256×(M-1), 256×M], and a minimum frequency value of the band is not less than 52.6 GHz; and
   according to the frequency domain position GSCN$_{NCD-SSB}$ of the synchronization raster where the NCD-SSB is located and the $N_{GSCN}^{offset}$, determining the frequency domain position GSCN$_{CD-SSB}$ of the synchronization raster where the CD-SSB is located.

2. The method for determining the frequency domain position as claimed in claim 1, wherein
   before the NCD-SSB is searched in the band, the method further comprises:

   in a case that an SSB is searched in the band, determining, according to the searched SSB, whether to attempt to initiate cell access, wherein a Sub-Carrier Spacing (SCS) of the SSB is different from a SCS of a type 0-Physical Downlink Control Channel (type0-PDCCH) corresponding to the SSB, the SSB comprises a sub-carrier offset parameter K$_{SSB}$ indicating a sub-carrier offset of the SSB, and a value of the sub-carrier offset parameter K$_{SSB}$ is configured according to a difference between an SCS of the SSB and the SCS of the type0-PDCCH corresponding to the SSB; and
   determining, according to the searched SSB, whether to attempt to initiate cell access comprises:

   in a case that the value of the sub-carrier offset parameter K$_{SSB}$ falls in [0, p$_0$], determining a type of the SSB as a CD-SSB, and demodulating the CD-SSB to attempt to initiate cell access, wherein the p$_0$ is a positive integer, and a value of the p$_0$ is determined according to the difference between the SCS of the SSB and the SCS of the type0-PDCCH corresponding to the SSB; and
   in a case that the value of the sub-carrier offset parameter K$_{SSB}$ falls in [p$_0$+1, p$_0$+2M], determining the type of the SSB as an NCD-SSB.

3. The method for determining the frequency domain position as claimed in claim 2, wherein in a case that the type of the SSB is the NCD-SSB, the $N_{GSCN}^{offset}$ is determined according to the sub-carrier offset parameter K$_{SSB}$ corresponding to the NCD-SSB and a PDCCH-System Information Block 1 configuration parameter (PDCCH-configSIB1) corresponding to the NCD-SSB;

   in a case that the sub-carrier offset parameter K$_{SSB}$ meets $K_{SSB} = p_0 + 1 + i$, a value of the $N_{GSCN}^{offset}$ falls in [256×i+1, 256×i+1, wherein i is an integer, and 0≤i≤M-1;

   in a case that the sub-carrier offset parameter K$_{SSB}$ meets $K_{SSB} = p_0 + 1 + i + M$, the value of the $N_{GSCN}^{offset}$ falls in [-256×(i+1), -(256×i+1)];
   and/or
   the value of the p$_0$ is a maximum integer value less than 12/j, wherein j indicates a ratio of the SCS of the SSB to the SCS of the type0-PDCCH corresponding to the SSB.

4. The method for determining the frequency domain position as claimed in claim 1, wherein
   before the NCD-SSB is searched in the band, the method further comprises:

in a case that an SSB is searched in the band, determining, according to the searched SSB, whether to attempt to initiate cell access, wherein the SSB comprises an indication parameter for indicating a type of the SSB, and the indication parameter is obtained by combining the sub-carrier offset parameter $K_{SSB}$ and an extended parameter A; and

determining, according to the searched SSB, whether to attempt to initiate cell access comprises:

in a case that a value of the indication parameter falls in a first range, determining the type of the SSB as a CD-SSB, and demodulating the CD-SSB to attempt to initiate cell access, wherein the value of the indication parameter represents a sub-carrier offset of the SSB; and

in a case that the value of the indication parameter falls in a second range, determining the type of the SSB as an NCD-SSB.

5. The method for determining the frequency domain position as claimed in claim 4, wherein in a case that the type of the SSB is the NCD-SSB and the value of the indication parameter is $p_1+i$, the value of the $N_{GSCN}^{offset}$ falls in [256×i+1, 256×(i+1)], wherein the

$p_1$ represents a minimum value of the indication parameter in the case that the type of the SSB is the NCD-SSB, i is an integer, and 0≤i≤M-1; and

in a case that the type of the SSB is the NCD-SSB and the value of the indication parameter is $p_1+i+M$, the value of the $N_{GSCN}^{offset}$ falls in [-256×(i+1), -(256×i+1)].

6. The method for determining the frequency domain position as claimed in claim 1, wherein before the NCD-SSB is searched in the band, the method further comprises:

in a case that an SSB is searched in the band, determining, according to the searched SSB, whether to attempt to initiate cell access, wherein the SSB comprises an indication parameter for indicating a type of the SSB, and the indication parameter is obtained by combining the sub-carrier offset parameter $K_{SSB}$ and an extended parameter A; and

determining, according to the searched SSB, whether to attempt to initiate cell access comprises:

in a case that a value of the extended parameter A is null or falls in a third range, and a value of the sub-carrier offset parameter $K_{SSB}$ or a value after the sub-carrier offset parameter $K_{SSB}$ and the extended parameter A are combined falls in a fourth range, determining the type of the SSB as a CD-SSB, and demodulating the CD-SSB, wherein the value of the sub-carrier offset parameter $K_{SSB}$ represents a sub-carrier offset of the SSB; and

in a case that the value of the extended parameter A falls in a fifth range, and the value of the sub-carrier offset parameter $K_{SSB}$ or the value after the sub-carrier offset parameter $K_{SSB}$ and the extended parameter A are combined falls in a sixth range, determining the type of the SSB as an NCD-SSB.

7. The method for determining the frequency domain position as claimed in claim 6, wherein in a case that the type of the SSB is the NCD-SSB and a value of the indication parameter is $p_2+i$, the value of the $N_{GSCN}^{offset}$ falls in [256×i+1, 256×(i+1)], wherein the $p_2$ represents a minimum value of the sub-carrier offset parameter $K_{SSB}$ or a minimum value after the sub-carrier offset parameter $K_{SSB}$ and the extended parameter A are combined in the case that the type of the SSB is the NCD-SSB, i is an integer, and 0≤i≤M-1; and

in a case that the type of the SSB is the NCD-SSB and the value of the indication parameter is $p_2+i+M$, the value of the $N_{GSCN}^{offset}$ falls in [-256×(i+1), -(256×i+1)].

8. The method for determining a frequency domain position as claimed in claim 1, wherein the $\left|N_{GSCN}^{offset}\right|$ is determined according to the following formula:

$$\left|N_{GSCN}^{offset}\right| = M \times (16 \times controlResourceSetZero + searchSpaceZero) + S$$

wherein a value of S falls in [1, M], and a PDCCH-System Information Block 1 configuration parameter (PDCCH-configSIB1) of the NCD-SSB comprises a control resource set zero (controlResourceSetZero) and a search space zero (searchSpaceZero).

9. The method for determining the frequency domain position as claimed in claim 8, wherein values of M and S are 3.

10. A cell broadcasting method, comprising:

   broadcasting Synchronization Signal Blocks (SSBs) in a band;
   in a case that the SSB is a None Cell Define SSB (NCD-SSB), an absolute value of a frequency domain position offset $\left|N_{GSCN}^{offset}\right|$ falls in [1, 256×M], a $N_{GSCN}^{offset}$ indicates an offset between a frequency domain position of a synchronization raster where a Cell Define SSB (CD-SSB) is located and a frequency domain position of a synchronization raster where the NCD-SSB is located, M is an integer not less than 2, a value of the number of synchronization rasters in the band falls in (256×(M-1), 256×M], and a minimum frequency value of the band is not less than 52.6 GHz.

11. The cell broadcasting method as claimed in claim 10, wherein a Sub-Carrier Spacing (SCS) of the SSB is different from a SCS of a type 0-Physical Downlink Control Channel (type0-PDCCH) corresponding to the SSB, the SSB comprises a sub-carrier offset parameter $K_{SSB}$ indicating a sub-carrier offset of the SSB, and a value of the sub-carrier offset parameter $K_{SSB}$ is configured according to a difference between an SCS of the SSB and the SCS of the type0-PDCCH corresponding to the SSB;

   in a case that the value of the sub-carrier offset parameter $K_{SSB}$ falls in [0, $p_0$], it indicates that a type of the SSB is a CD-SSB, wherein the $p_0$ is a positive integer, and a value of the $p_0$ is determined according to the difference between the SCS of the SSB and the SCS of the type0-PDCCH corresponding to the SSB; and
   in a case that the value of the sub-carrier offset parameter $K_{SSB}$ falls in [$p_0$+1, $p_0$+2M], it indicates that the type of the SSB is an NCD-SSB.

12. The cell broadcasting method as claimed in claim 11, wherein in a case that the type of the SSB is the NCD-SSB, the $N_{GSCN}^{offset}$ is determined according to the sub-carrier offset parameter $K_{SSB}$ corresponding to the NCD-SSB and a PDCCH-System Information Block 1 configuration parameter (PDCCH-configSIB1) corresponding to the NCD-SSB;

   in a case that the sub-carrier offset parameter $K_{SSB}$ meets $K_{SSB} = p_0 + 1 + i$, a value of the $N_{GSCN}^{offset}$ falls in [256×i+1, 256×i+1, wherein i is an integer, and 0≤i≤M-1;

   in a case that the sub-carrier offset parameter $K_{SSB}$ meets $K_{SSB} = p_0 + 1 + i + M$, the value of the $N_{GSCN}^{offset}$ falls in [-256×(i+1), -(256×i+1)];
   and/or
   the value of the $p_0$ is a maximum integer value less than 12/j, wherein j indicates a ratio of the SCS of the SSB to the SCS of the type0-PDCCH corresponding to the SSB.

13. The cell broadcasting method as claimed in claim 10, wherein the SSB comprises an indication parameter for indicating a type of the SSB, and the indication parameter is obtained by combining the sub-carrier offset parameter $K_{SSB}$ and an extended parameter A;

   in a case that a value of the indication parameter falls in a first range, the type of the SSB is determined as a CD-SSB, and the CD-SSB is demodulated to attempt to initiate cell access, wherein the value of the indication parameter represents a sub-carrier offset of the SSB; and
   in a case that the value of the indication parameter falls in a second range, the type of the SSB is determined as an NCD-SSB.

14. The cell broadcasting method as claimed in claim 13, wherein in a case that the type of the SSB is the NCD-SSB and the value of the indication parameter is $p_1$+i, the value of the $N_{GSCN}^{offset}$ falls in [256×i+1, 256×(i+1)], wherein

the $p_1$ represents a minimum value of the indication parameter in the case that the type of the SSB is the NCD-SSB, i is an integer, and 0≤i≤M-1; and
in a case that the type of the SSB is the NCD-SSB and the value of the indication parameter is $p_1$+i+M, the value of the $N_{GSCN}^{offset}$ falls in [-256×(i+1), -(256×i+1)].

15. The cell broadcasting method as claimed in claim 10, wherein the SSB comprises an indication parameter for indicating a type of the SSB, and the indication parameter is obtained by combining the sub-carrier offset parameter $K_{SSB}$ and an extended parameter A;

in a case that a value of the extended parameter A is null or falls in a third range, and a value of the sub-carrier offset parameter $K_{SSB}$ or a value after the sub-carrier offset parameter $K_{SSB}$ and the extended parameter A are combined falls in a fourth range, the type of the SSB is determined as a CD-SSB, and the CD-SSB is demodulated, wherein the value of the sub-carrier offset parameter $K_{SSB}$ represents a sub-carrier offset of the SSB; and
in a case that the value of the extended parameter A falls in a fifth range, and the value of the sub-carrier offset parameter $K_{SSB}$ or the value after the sub-carrier offset parameter $K_{SSB}$ and the extended parameter A are combined falls in a sixth range, the type of the SSB is determined as an NCD-SSB.

16. The cell broadcasting method as claimed in claim 15, wherein in a case that the type of the SSB is the NCD-SSB and a value of the indication parameter is $p_2$+i, the value of the $N_{GSCN}^{offset}$ falls in [256×i+1, 256×(i+1)], wherein the $p_2$ represents a minimum value of the sub-carrier offset parameter $K_{SSB}$ or a minimum value after the sub-carrier offset parameter $K_{SSB}$ and the extended parameter A are combined in the case that the type of the SSB is the NCD-SSB, i is an integer, and 0≤i≤M-1; and
in a case that the type of the SSB is the NCD-SSB and the value of the indication parameter is $p_2$+i+M, the value of the $N_{GSCN}^{offset}$ falls in [-256×(i+1), -(256×i+1)].

17. The cell broadcasting method as claimed in claim 10, wherein a correspondence relationship between the $\left|N_{GSCN}^{offset}\right|$ and a PDCCH-System Information Block 1 configuration parameter (PDCCH-configSIB1) of the NCD-SSB meets:

$$\left|N_{GSCN}^{offset}\right| = M \times (16 \times controlResourceSetZero + searchSpaceZero) + S$$

wherein the PDCCH-configSIB1 of the NCD-SSB comprises a control resource set zero (controlResourceSetZero) and a search space zero (searchSpaceZero), and a value of S falls in [1, M].

18. The cell broadcasting method as claimed in claim 17, wherein values of M and S are 3.

19. A system for determining a frequency domain position of a Synchronization Signal Block (SSB), comprising:

a first determination module, configured to, in a case that a None Cell Define SSB (NCD-SSB) is searched in a band, determine a frequency domain position offset $N_{GSCN}^{offset}$, wherein the $N_{GSCN}^{offset}$ indicates an offset between frequency domain position of a synchronization raster where a Cell Define SSB (CD-SSB) is located and a frequency domain position of a synchronization raster where the NCD-SSB is located, a value of $\left|N_{GSCN}^{offset}\right|$ falls in [1, 256×M], M is an integer not less than 2, a value of the number of synchronization rasters in the band falls in (256×(M-1), 256×M], and a minimum frequency value of the band is not less than 52.6 GHz; and
a second determination module, configured to, according to the frequency domain position GSCN$_{NCD-SSB}$ of the synchronization raster where the NCD-SSB is located and the $N_{GSCN}^{offset}$, determine the frequency domain position GSCN$_{CD-SSB}$ of the synchronization raster where the CD-SSB is located.

20. A cell broadcasting system, comprising:

a broadcasting module, configured to broadcast Synchronization Signal Blocks (SSBs) in a band, wherein in a case that the SSB is a None Cell Define SSB (NCD-SSB), an absolute value of a frequency domain position offset $\left|N_{GSCN}^{offset}\right|$ falls in [1, 256×M], a $N_{GSCN}^{offset}$ indicates an offset between a frequency domain position of a synchronization raster where a Cell Define SSB (CD-SSB) is located and a frequency domain position of a synchronization raster where the NCD-SSB is located, M is an integer not less than 2, a value of the number of synchronization rasters in the band falls in (256×(M-1), 256×M], and a minimum frequency value of the band is not less than 52.6 GHz.

21. An electronic device, comprising a memory, a processor, and a computer program stored in the memory and executable on the processor, wherein the processor, when executing the computer program, implements the method for determining the frequency domain position of the Synchronization Signal Block (SSB) as claimed in any one of claims 1 to 9, or the cell broadcasting method as claimed in any one of claims 10 to 18.

22. A non-transitory computer readable storage medium, having a computer program stored thereon, wherein when being executed by a processor, the computer program implements the method for determining the frequency domain position of the Synchronization Signal Block (SSB) as claimed in any one of claims 1 to 9, or the cell broadcasting method as claimed in any one of claims 10 to 18.

Fig. 1

Fig. 2

| in a case that a None Cell Define SSB (NCD-SSB) is searched in a band, a frequency domain position offset is determined | S101 |

| according to the frequency domain position $GSCN_{NCD\text{-}SSB}$ of a synchronization raster (synch raster) where the NCD-SSB is located and the frequency domain position offset, the frequency domain position $GSCN_{CD\text{-}SSB}$ of the synch raster where the CD-SSB is located is determined | S102 |

Fig. 3

first determination module ⟋ 301

second determination module ⟋ 302

system for determining a frequency domain position of an SSB

Fig. 4

921
RAM

923
ROM

91
processor

cache memory
922

924
program module

925
program tool

memory
92

9

93

I/O interface
95

network adapter
96

electronic device

external device
94

Fig. 5

| NR 工作频段 | SS Block SCS | GSCN 范围 (第一个– <步长> – 最后一个) |
|---|---|---|
| n1 | 15kHz | 5279 – <1> – 5419 |
| n2 | 15kHz | 4829 – <1> – 4969 |
| n3 | 15kHz | 4517 – <1> – 4693 |
| n5 | 15kHz | 2177 – <1> – 2230 |
| | 30kHz | 2183 – <1> – 2224 |
| n7 | 15kHz | 6554 – <1> – 6718 |
| n8 | 15kHz | 2318 – <1> – 2395 |
| n12 | 15kHz | 1828 - <1> -  1858 |
| n20 | 15kHz | 1982 – <1> – 2047 |
| n25 | 15 kHz | 4829 – <1> – 4981 |
| n28 | 15kHz | 1901 – <1> – 2002 |
| n34 | 15kHz | 5030 – <1> – 5056 |
| n38 | 15kHz | 6431 – <1> – 6544 |
| n39 | 15kHz | 4706 – <1> – 4795 |
| n40 | 15kHz | 5756 – <1> – 5995 |
| n41 | 15kHz | 6246 – <3> – 6714 |
| | 30 kHz | 6252 – <3> – 6714 |
| n51 | 15kHz | 3572 – <1> – 3574 |
| n66 | 15kHz | 5279 – <1> – 5494 |
| | 30kHz | 5285 – <1> – 5488 |
| n70 | 15kHz | 4993 – <1> – 5044 |
| n71 | 15kHz | 1547 – <1> – 1624 |
| n75 | 15kHz | 3584 – <1> – 3787 |
| n76 | 15kHz | 3572 – <1> – 3574 |
| n77 | 30kHz | 7711 – <1> – 8329 |
| n78 | 30kHz | 7711 – <1> – 8051 |
| n79 | 30kHz | 8480 – <16> – 8880 |

Fig. 6

| $k_{SSB}$ | pdcch-ConfigSIB1 | $N_{GSCN}^{Offset}$ |
|---|---|---|
| 24 | 0, 1, ..., 255 | 1, 2, ..., 256 |
| 25 | 0, 1, ..., 255 | 257, 258, ..., 512 |
| 26 | 0, 1, ..., 255 | 513, 514, ...., 768 |
| 27 | 0, 1, ..., 255 | -1, -2, ..., -256 |
| 28 | 0, 1, ..., 255 | -257, -258, ..., -512 |
| 29 | 0, 1, ..., 255 | -513, -514, ...., -768 |
| 30 | 0, 1, ..., 255 | 保留值（Reserved, Reserved, ..., Reserved） |

Fig. 7

| $k_{SSB}$ | pdcch-ConfigSIB1 | $N_{GSCN}^{Offset}$ |
|---|---|---|
| 12 | 0, 1, …, 255 | 1, 2, …, 256 |
| 13 | 0, 1, …, 255 | -1, -2, …, -256 |
| 14 | 0, 1, …, 255 | 保留值（Reserved, Reserved, …, Reserved） |

Fig. 8

```
                          ┌─ 100
        ┌──────────────────┐
        │  ┌────────────┐  │
        │  │  etwork    │─┼── 101
        │  │  device    │  │
        │  └────────────┘  │
        │        │         │
        │  ┌────────────┐  │
        │  │  terminal  │─┼── 102
        │  │  device    │  │
        │  └────────────┘  │
        └──────────────────┘
```

Fig. 9

in a case that an SSB is searched in a band whether to attempt to initiate cell access is determined according to the searched SSB ⟋ 201

Fig. 10

SSB

type0-PDCCH

Fig. 11

SSB

type0-PDCCH

Fig. 12

SSB

type0-PDCCH

## INTERNATIONAL SEARCH REPORT

| | International application No. |
|---|---|
| | **PCT/CN2022/130984** |

| A. | CLASSIFICATION OF SUBJECT MATTER |
|---|---|

H04W48/10(2009.01)i;H04W56/00(2009.01)i

According to International Patent Classification (IPC) or to both national classification and IPC

| B. | FIELDS SEARCHED |
|---|---|

Minimum documentation searched (classification system followed by classification symbols)

H04W48/-; H04W56/-; H04W72/-

Documentation searched other than minimum documentation to the extent that such documents are included in the fields searched

Electronic data base consulted during the international search (name of data base and, where practicable, search terms used)

CNABS; CNTXT; CNKI; 百度文库, BAIDU WENKU: 同步信号, 同步信号块, 小区定义同步信号块, 非小区定义同步信号块, 偏移, 频域位置, 栅格, 256, 52.6GHz, SSB, CD-SSB, NCD-SSB, 数量; VEN; EPTXT; USTXT; WOTXT; IEEE; 3GPP: cell-defining SSB, non cell-defining SSB, SSB, offset, frequency, position, synchronization raster, 256, 52.6GHz, 5G

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 113709864 A (HUAWEI TECHNOLOGIES CO., LTD.) 26 November 2021 (2021-11-26) description, paragraphs [0127]-[0205] | 1-2, 4, 10, 11, 13, 19-22 |
| A | WO 2021062584 A1 (GUANGDONG OPPO MOBILE TELECOMMUNICATIONS CORP., LTD. et al.) 08 April 2021 (2021-04-08) description, page 3, line 34 to page 5, line 30 | 1-22 |
| A | CN 111083777 A (CHONGQING UNIVERSITY OF POSTS AND TELECOMMUNICATIONS) 28 April 2020 (2020-04-28) entire document | 1-22 |
| A | US 2021144720 A1 (COMCAST CABLE COMMUNICATIONS) 13 May 2021 (2021-05-13) entire document | 1-22 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 February 2023** | **09 February 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/130984**

| Patent document cited in search report | | | Publication date (day/month/year) | Patent family member(s) | | | Publication date (day/month/year) |
|---|---|---|---|---|---|---|---|
| CN | 113709864 | A | 26 November 2021 | WO | 2021233206 | A1 | 25 November 2021 |
| WO | 2021062584 | A1 | 08 April 2021 | US | 2021385054 | A1 | 09 December 2021 |
| | | | | US | 11387971 | B2 | 12 July 2022 |
| | | | | KR | 20210089235 | A | 15 July 2021 |
| | | | | AU | 2019468915 | A1 | 10 June 2021 |
| | | | | AU | 2019468915 | B2 | 29 September 2022 |
| | | | | EP | 3873142 | A1 | 01 September 2021 |
| | | | | EP | 3873142 | A4 | 29 December 2021 |
| | | | | JP | 2022517596 | A | 09 March 2022 |
| | | | | US | 2022329398 | A1 | 13 October 2022 |
| | | | | CN | 112889319 | A | 01 June 2021 |
| | | | | CN | 113133128 | A | 16 July 2021 |
| | | | | IN | 202127035629 | A | 15 October 2021 |
| CN | 111083777 | A | 28 April 2020 | None | | | |
| US | 2021144720 | A1 | 13 May 2021 | EP | 3820051 | A1 | 12 May 2021 |
| | | | | CA | 3098575 | A1 | 07 May 2021 |

Form PCT/ISA/210 (patent family annex) (July 2022)